# EUROPÄISCHE PATENTSCHRIFT

(11) **EP 4 054 119 B1**
(45) Veröffentlichungstag und Bekanntmachung des Hinweises auf die Patenterteilung: **18.12.2024**
(21) Anmeldenummer: 22158385.9
(22) Anmeldetag: 24.02.2022
(51) Int. Cl.: H04L 9/40, G06F 21/31

(54) **ABSTIMMUNGSSYSTEM FÜR EINE VIRTUELLE KONFERENZ**
VIRTUAL CONFERENCE VOTING SYSTEM
SYSTÈME DE VOTE POUR UNE CONFÉRENCE VIRTUELLE

(30) Priorität: 05.03.2021 DE 102021105434
(43) Veröffentlichungstag der Anmeldung: 07.09.2022
(73) Patentinhaber: Bundesdruckerei GmbH, 10969 Berlin (DE)
(72) Erfinder: PETERS, Florian, 10437 Berlin (DE)
(74) Vertreter: Richardt Patentanwälte PartG mbB

(56) Entgegenhaltungen:
- US-A1- 2013 173 356
- US-A1- 2019 114 861
- US-A1- 2020 258 338

## Beschreibung

Die Erfindung betrifft ein Verfahren zum kryptographisch gesicherten Abstimmen über einen Antrag für eine virtuelle Konferenz. Ferner betrifft die Erfindung ein Abstimmungsverwaltungsgerät, ein Antragsverwaltungsgerät, ein Abstimmungssystem, welches ein Abstimmungsverwaltungsgerät und ein Antragsverwaltungsgerät umfasst, und sowie ein System, welches ein Abstimmungssystem und eine Mehrzahl Telekommunikationsendgeräten umfasst, zum Ausführen des Verfahrens zum kryptographisch gesicherten Abstimmen über einen Antrag für eine virtuelle Konferenz.

Eine Abstimmung ist ein Instrument der gemeinschaftlichen Willenserklärung eines Kollegialorgans oder einer Personengruppe über einen Antrag durch Abgabe einer Stimme und dient der Entscheidungsfindung und Beschlussfassung. Abstimmungen folgen festgelegten Regeln, etwa durch eine Verfassung, ein Gesetz, eine Satzung, einen Gesellschaftsvertrag, eine Geschäftsordnung, eine Rechtsverordnung, einen Versammlungsbeschluss oder Gewohnheitsrecht.

Im Zuge einer Zusammenkunft, d.h. einer Konferenz, der stimmberechtigten Personen wird beispielsweise durch Abstimmungserklärungen der versammelten stimmberechtigten Personen, etwa in Form eines Handheben, Erheben, Zeigen der Wahlkarte oder Zuruf abgestimmt. Die entsprechenden Abstimmungserklärungen werden im Zuge einer Stimmzählung zur Ermittlung eines Abstimmungsergebnisses basierend auf Stimmenmehrheiten gezählt.

Um das Auszählen abgegebener Stimmen zu vereinfachen, kommen beispielsweise Konferenzabstimmungssysteme, sog. Conference Voting Systems, zum Einsatz, bei welchen jeder anwesenden stimmberechtigten Person an ihrem Platz ein Gerät zur Eingabe ihrer Stimme bzw. Abstimmungserklärung bereitgestellt wird.

Den vorgenannten Abstimmungsvarianten ist allesamt gemeinsam, dass sie eine Anwesenheit der stimmberechtigten Person bei der Stimmabgabe voraussetzen. Im Falle einer virtuellen Konferenz, bei welcher die stimmberechtigten Personen nicht an einem gemeinsamen Versammlungsort anwesend sind, sind diese Abstimmungsvarianten jedoch nicht anwendbar.

Die US 2013/173356 A1 beschreibt Verfahren, Systeme und computerlesbare Medien zum Durchführen einer Wahl. Es wird ein Verfahren zum Sicherstellen der Integrität eines elektronischen Stimmzettels bereitgestellt. Das Verfahren umfasst ein Erstellen elektronischer Stimmzettel für Wähler basierend auf von den Wählern erhaltenen Stimmen; ein digitales Signieren der elektronischen Stimmzettel; ein Speichern der signierten elektronischen Stimmzettel; ein Abrufen der signierten elektronischen Stimmzettel aus einem Speicher; ein Verifizieren der digitalen Signaturen auf den abgerufenen elektronischen Stimmzetteln; und ein Präsentieren von Validierungsseiten für die Wähler, die von den abgerufenen elektronischen Stimmzetteln abgeleitet sind, wobei die Validierungsseiten ein Benutzerschnittstellenelement für die Wähler umfassen, um zu bestätigen, dass die abgerufenen elektronischen Stimmzettel ihre Stimme genau wiedergeben.

Der Erfindung liegt daher die Aufgabe zugrunde, ein Verfahren zum Abstimmen über Anträge für virtuelle Konferenzen zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum kryptographisch gesicherten Abstimmen über einen Antrag unter Verwendung eines Abstimmungssystem für eine virtuelle Konferenz sowie eine Mehrzahl von Telekommunikationsendgeräten. Das Abstimmungssystem umfasst ein zentrales Antragsverwaltungsgerät und ein zentrales Abstimmungsverwaltungsgerät. Jedes der Telekommunikationsendgeräte ist jeweils einem stimmberechtigten Teilnehmer der virtuellen Konferenz zugeordnet.

Das Verfahren umfasst durch das Abstimmungsverwaltungsgerät:
- Empfangen einer Mehrzahl von Abstimmungsanfragen von dem Antragsverwaltungsgerät, wobei die Mehrzahl von Abstimmungsanfragen eine Abstimmungsanfrage für jeden der stimmberechtigten Teilnehmer umfasst, wobei die Abstimmungsanfragen der Mehrzahl von Abstimmungsanfragen jeweils einen Identifikator des stimmberechtigten Teilnehmers umfassen, welchem sie zugeordnet sind, sowie einen Datensatz einer aktuellen Version des Antrags, über welche abzustimmen ist.

Ferner umfasst das Verfahren für jede der empfangenen Abstimmungsanfragen durch das Abstimmungsverwaltungsgerät:
- Identifizieren eines von dem Abstimmungsverwaltungsgerät verwalteten Nutzerkontos des stimmberechtigten Teilnehmers, welchem die Abstimmungsanfrage zugeordnet ist, unter Verwendung des von der Abstimmungsanfrage umfassten Identifikators, wobei das Nutzerkonto einen dem stimmberechtigten Teilnehmer zugeordneten privaten kryptographischen Schlüssel umfasst,
- Erzeugen eines individuellen Codes für den stimmberechtigten Teilnehmer, welchem die Abstimmungsanfrage zugeordnet ist,
- Senden einer den erzeugten individuellen Codes umfassenden Abstimmungsaufforderung über einen ersten Kommunikationskanal an das Telekommunikationsendgerät, welches dem stimmberechtigten Teilnehmer des identifizierten Nutzerkontos zugeordnet ist, unter Verwendung von Verbindungsinformationen des Telekommunikationsendgeräts, welche das identifizierte Nutzerkonto umfasst,
- Empfangen einer Abstimmungsantwort auf die gesendete Abstimmungsaufforderung von dem Telekommunikationsendgerät über einen zweiten Kommunikationskanal, wobei die Abstimmungsantwort den gesendeten individuellen Code der Abstimmungsaufforderung, eine Authentifizierungsinformation des Nutzers des Telekommunikationsendgeräts sowie eine Abstimmungserklärung des Nutzers des Telekommunikationsendgeräts umfasst, wobei es sich bei dem ersten Kommunikationskanal um einen zu dem zweiten Kommunikationskanal separaten und/oder separat gesicherten Seitenkanal handelt,
- Prüfen der Validität des empfangenen Codes und der empfangenen Authentifizierungsinformation, wobei das Prüfen der Validität einen Vergleich des empfangenen Codes auf Übereinstimmung mit dem gesendeten individuellen Code umfasst und einen Vergleich der empfangenen Authentifizierungsinformation auf Übereinstimmung mit einer von dem Nutzerkonto umfassten Authentifizierungsinformation des stimmberechtigten Teilnehmers,
- auf eine erfolgreiche Prüfung hin, Signieren einer Kombination, welche den Datensatz der aktuellen Version des Antrags, über welche abzustimmen ist, den Identifikator des stimmberechtigten Teilnehmers und die Abstimmungserklärung des Nutzers des Telekommunikationsendgeräts umfasst, unter Verwendung des privaten kryptographischen Schlüssels des stimmberechtigten Teilnehmers,
- Senden der signierten Kombination an das Antragsverwaltungsgerät zum Prüfen der Signatur der Kombination unter Verwendung eines öffentlichen kryptographischen Schlüssels des stimmberechtigten Teilnehmers, zum Speichern zusammen mit der aktuellen Version des Antrags und zum Auszählen des Abstimmungsergebnisses unter Verwendung der von der signierten Kombination umfassten Abstimmungserklärungen.

Ausführungsformen können den Vorteil haben, dass ein Verfahren bereitgestellt wird, bei welchem für eine virtuelle Konferenz sichergestellt werden kann, dass bei einer Abstimmung abgegebene Stimmen tatsächlich von den stimmberechtigten Teilnehmern der virtuellen Konferenz stammen. Bei einer virtuellen Konferenz handelt es sich um eine Versammlung, bei welcher die Teilnehmer nicht an einem gemeinsamen Ort zusammenkommen, sondern Kommunikationsmittel, wie etwa Konferenzschaltungen, virtuell zusammenkommen und sich austauschen. Ist im Zuge einer solchen virtuellen Konferenz über einen Antrag abzustimmen, ergibt sich die Schwierigkeit, dass mangels persönlicher Anwesenheit der Teilnehmer schwierig ist nachzuvollziehen, dass eine abgegebene Stimme tatsächlich von demjenigen Teilnehmer stammt, in dessen Namen sie abgegeben wird. Ausführungsformen ermöglichen es mittels der Signatur eine kryptographisch gesicherte Verknüpfung zwischen dem abzustimmenden Antrag, einer Abstimmungsentscheidung bezüglich des entsprechenden Antrags und der Person des Abstimmenden zu erstellen. Dass es sich bei dem Abstimmenden tatsächlich um den stimmberechtigten Teilnehmer handelt, welchem die Stimme zugeordnet wird, kann auf Basis einer Zwei-Faktor-Authentifizierung sichergestellt werden. Diese Zwei-Faktor-Authentifizierung umfasst als ersten Faktor den individuellen Code, welcher einen Besitz eines registrierten Telekommunikationsendgeräts nachweist. Da der entsprechende Code an das registrierte Telekommunikationsendgerät gesendet wird, ist der Besitz desselben eine notwendige Voraussetzung dafür, Kenntnis von dem individuellen Code erlagen zu können. Umgedreht wird mit der Kenntnis des individuellen Codes also der Besitz des entsprechenden registrierten Telekommunikationsendgeräts nachgewiesen. Ferner umfasst die Zwei-Faktor-Authentifizierung als zweiten Faktor die Authentifizierungsinformation des Nutzers des entsprechenden Telekommunikationsendgeräts, bei welcher es sich beispielsweise um Wissen in Form eine PIN oder Passworts handelt. Beispielsweise kann es sich bei der Authentifizierungsinformation auch um eine biometrische Information bzw. Eigenschaft, wie etwa einen Fingerabdruck oder einen Gesichtsscan handeln. Durch die Authentifizierungsinformation kann sichergestellt werden, dass es auch tatsächlich der stimmberechtigte Teilnehmer ist, welcher als Nutzer das Telekommunikationsendgerät bedient. Beispielsweise sind in den Nutzerkonten der berechtigten Teilnehmer, welche das Abstimmungsverwaltungsgerät umfasst jeweils Referenzdaten zum Prüfen der individuellen Authentifizierungsinformationen der individuellen stimmberechtigten Teilnehmer hinterlegt.

Da die Authentifizierung der stimmberechtigten Teilnehmer zwischen Telekommunikationsendgerät und Abstimmungsverwaltungsgerät erfolgt, kann es sich bei dem Identifikator der stimmberechtigten Teilnehmer sowohl um einen pseudonymisierten Identifikator handeln als auch um einen Identifikator, welcher den Klarnamen des stimmberechtigten Teilnehmers umfasst. Somit sind anonyme Abstimmungen möglich, bei welchen anhand der auf dem Antragsverwaltungssystem gespeicherten Abstimmungsdaten nicht ersichtlich ist, wer wie abgestimmt hat. Ebenso sind namentliche Abstimmungen möglich, bei welchen anhand der gespeicherten Abstimmungsdaten ersichtlich ist, wer wie abgestimmt hat.

Dem Antragsverwaltungsgerät werden von dem Abstimmungsverwaltungsgerät sämtliche abgegebene Stimmen in Form der signierten Kombinationen zur Verfügung gestellt. Anhand öffentlicher kryptographischer Schlüssel der stimmberechtigten Teilnehmer als Signaturprüfschlüssel können diese Signaturen auf ihre Validität geprüft werden. Die abgegebenen Stimmen können von dem Antragsverwaltungsgerät gespeichert und ausgezählt werden. Beispielsweise können die stimmberechtigten Teilnehmer Ja, Nein oder Enthaltung stimmen. Ein Beschluss kommt beispielsweise durch eine Mehrheit zustande, wenn eine vorher festgelegte Mindestzahl an Ja-Stimmen abgegeben wurde. Liegen mehrere alternative Anträge zu demselben Thema vor, wird beispielsweise zuerst über einen am weitestgehenden Antrag abgestimmt. Beispielsweise entscheidet über einen Antrag eine einfache, sogenannte relative, Mehrheit, d.h. die Mehrheit der abgegebenen Stimmen, wobei Stimmenthaltungen als nicht abgegebene Stimmen zu werten sind. Ebenso sind auch andere Abstimmungsregel und/oder Anforderungen möglich.

Ausführungsformen können den Vorteil haben, dass sie eine persönliche Abstimmung selbst für virtuelle Konferenzen, bei welchen sich die abstimmenden Personen nicht persönlich zusammenkommen, ermöglichen. Dies gilt etwa für Parteitage oder Hauptversammlungen.

Ausführungsformen können den Vorteil, dass Hauptversammlungen, beispielsweise von AGs, Parteien und andere Mitbestimmungsorganisationen, bei welchen Abstimmen per Namen erfolgen müssen, können Anträge beispielsweise direkt mit Ja oder Nein oder Enthaltung bescheiden, ohne dabei anwesend oder spezielle Tools zu benötigen. Für die abstimmenden Personen ist beispielsweise ein registriertes Telekommunikationsendgerät, wie etwa ein Smartphone, ausreichend.

Das zentrale Antragsverwaltungsgerät erlaubt es beispielsweise Anträge bereitzustellen, diese zu überarbeiten und zu versionieren, d.h. unterschiedliche Versionen revisionssicher zu identifizieren und zu speichern. Somit kann eine Version eines Antrags erstellt und zur Abstimmung gestellt werden. Beispielsweise wird jedes Mal, wenn eine Abstimmung eines Dokuments erfolgen soll, die Bearbeitung des entsprechenden Dokuments abgeschlossen und von dem Antragsverwaltungsgerät eine die aktuelle Version des Dokuments zur Abstimmung gestellt. Hierzu wird von dem Abstimmungsverwaltungsgerät eine Mehrzahl von Abstimmungsanfragen erstellt und an das Abstimmungsverwaltungsgerät gesendet. Die stimmberechtigten Teilnehmer bzw. Personen erhalten daraufhin jeweils eine Abstimmungsanforderung mit einem individuellen Code auf ein ihnen zugeordnetes Telekommunikationsendgerät. Unter Verwendung des individuellen Codes können die stimmberechtigten Teilnehmer mit ihrem Telekommunikationsendgerät abstimmen. Hierzu wird beispielsweise die Abstimmungserklärung erstellt und zusammen mit dem individuellen Code und der Authentifizierungsinformation über den zweiten Kommunikationskanal an das Abstimmungsverwaltungsgerät gesendet. Die Verknüpfung von Abstimmungserklärung, individuellem Code und Authentifizierungsinformation kann beispielsweise daraus resultieren, dass diese zusammen über den in verschlüsselter Form über dem zweiten Kommunikationskanal gesendet werden. Der zweite Kommunikationskanal ist beispielsweise mit einem ephemeren Sitzungsschlüssel verschlüsselt. Beispielsweise werden Abstimmungserklärung, individuellem Code und Authentifizierungsinformation verknüpft, indem ein Hashwert der Kombination gebildet und mit der Abstimmungsantwort über den zweiten Kommunikationskanal übertragen wird. Beispielsweise wird unter Verwendung eines weiteren ephemeren Sitzungsschlüssels aus dem Hashwert ein MAC-Code der Kombination erzeugt. Dabei könne sie beispielsweise entscheiden, ob sie dem zur Abstimmung gestellten Antrag zustimmen, diesen ablehnen oder sich der Stimme enthalten wollen. Die jeweilige Abstimmungserklärung wird von dem Abstimmungsverwaltungsgerät mit einem dem einem privaten kryptographischen Schlüssel des abstimmenden Teilnehmers signiert und dem Antragsverwaltungsgerät zur Auszählung des Abstimmungsergebnisses zur Verfügung gestellt. Durch eine Zwei-Faktor-Authentifizierung (individueller Code und Authentifizierungsinformation) der Nutzer der Telekommunikationsendgeräte sowie die Signatur kann in kryptographisch gesicherter Weise sichergestellt werden, dass tatsächlich nur die stimmberechtigten Teilnehmer der virtuellen Konferenz abstimmen.

Hauptversammlungen von AGs, Parteien und andere Mitbestimmungsorganisationen können beispielsweise in Form einer virtuellen Konferenz online einfach tagen und Dokumente, welche später zur Abstimmung zu stellen sind, live bearbeiten. Ist die Bearbeitung abgeschlossen, kann eine aktuelle Version als Antrag zur Abstimmung gestellt werden. Alle stimmberechtigten Teilnehmer, ob vor Ort in einem Saal oder entfernt, können abstimmen.

Bei der Konferenz handelt es sich beispielsweise um eine Hauptversammlung. Eine solche Hauptversammlung ist im Gesellschaftsrecht eines der drei Organe einer Aktiengesellschaft, einer Kommanditgesellschaft auf Aktien oder einer Societas Europaea. Sie dient als Versammlung aller Aktionäre neben der Information insbesondere der Beschlussfassung über unternehmensbezogene Vorgänge. Bei der Hauptversammlung kann es sich sowohl um eine ordentliche, als auch um eine außerordentliche Hauptversammlung handeln.

Bei der Konferenz kann es sich beispielsweise um eine Mitgliederversammlung im Falle eines Vereins oder um eine Gesellschafterversammlung im Falle einer GmbH oder einer Personengesellschaft handeln.

Bei der Konferenz handelt es sich beispielsweise um eine Mitglieder- oder Vertreterversammlung in Form eines Parteitags oder einer Hauptversammlung einer politischen Partei.

Ausführungsformen können vorteilhaft, da einerseits der Implementierungsaufwand zum Ausführen der Abstimmung auf Seiten der stimmberechtigten Teilnehmer der virtuellen Konferenz gering ist, weil die elektronischen Signaturen nicht von den Telekommunikationsendgerät selbst generiert werden, sondern deren Erzeugung mithilfe der Telekommunikationsendgeräte lediglich initiiert wird, ohne dass dies besondere Hardwarevoraussetzungen oder ein Schlüsselmanagement von kryptographischen Schlüsseln seitens des Telekommunikationsendgeräts voraussetzt, und andererseits das Verfahren besonders sicher ist, und insbesondere gesetzeskonform ausgebildet sein kann.

Die Erzeugung einer elektronischen Signatur setzt nach Ausführungsformen jeweils eine 2-Faktor-Authentifizierung der Nutzer der Telekommunikationsendgeräte voraus. Diese 2-Faktor-Authentifizierung umfasst einen Nachweis eines "Besitzes", nämlich den Besitz des Telekommunikationsendgeräts mittels des jeweiligen individuellen Codes, welcher ausschließlich dem entsprechenden Telekommunikationsendgerät zur Verfügung gestellt wird, und eines "Wissens", nämlich des Wissens der Authentifizierungsinformation.

Der Nachweis des Besitzes des Telekommunikationsendgeräts erfolgt jeweils, indem ein individueller Code von dem Abstimmungsverwaltungsgerät über einen ersten Kommunikationskanal in Form eines Seitenkanals an das Telekommunikationsendgerät übertragen wird. Diesen individuellen Code kann ein Nutzer bzw. stimmberechtigter Teilnehmer der virtuellen Konferenz nur empfangen, wenn er sich im Besitz des entsprechenden Telekommunikationsendgeräts befindet. Somit kann auch die anschließende Übertragung der Abstimmungsantwort mit dem individuellen Code, der Authentifizierungsinformation des Nutzers und der Abstimmungserklärung über einen zweiten Kommunikationskanal, etwa eine verschlüsselte Internet-Session, nur unter der Voraussetzung erfolgen, dass sich der Nutzer sowohl in Besitz des Telekommunikationsendgeräts befindet, als auch über Authentifizierungsinformation verfügt. Hierdurch wird eine 2-Faktor-Authentifizierung implementiert.

Nach Ausführungsformen umfasst die Abstimmungserklärung eine Angabe, ob der Nutzer des Telekommunikationsendgeräts der aktuellen Version des Antrags, über welche abzustimmen ist, zustimmt, die aktuelle Version ablehnt oder sich der Abstimmung enthält.

Ausführungsformen können den Vorteil haben, dass die stimmberechtigten Teilnehmer über einen Antrag mit Ja, Nein oder Enthaltung abstimmen können. Beispielsweise werden den stimmberechtigten Teilnehmern auf ihren jeweiligen Telekommunikationsendgerät mittels einer Anzeigevorrichtung eine graphische Benutzeroberfläche angezeigt, welche drei Schaltflächen bzw. Steuerelemente für die drei Optionen umfasst.

Nach Ausführungsformen handelt es sich bei dem Identifikator des stimmberechtigten Teilnehmers um ein Pseudonym des stimmberechtigten Teilnehmers. Ausführungsformen können den Vorteil haben, dass nicht namentliche Abstimmungen unter Verwendung von Pseudonymen ermöglicht werden. Beispielsweise kann so eine anonyme Abstimmung ermöglicht werden. Anonym ist die Abstimmung, falls anhand des Pseudonyms keine Rückschlüsse auf den Namen des stimmberechtigten Teilnehmers gezogen werden können, welcher hinter dem entsprechenden Pseudonym steht. Beispielsweise handelt es sich bei dem Pseudonym um einen Zufallswert oder einen Pseudo-Zufallswert. Beispielsweise wird das Pseudonym unter Verwendung einer Einwegfunktion, wie etwa einer Hash-Funktion, erzeugt.

Nach Ausführungsformen umfasst der Identifikator des stimmberechtigten Teilnehmers einen Klarnamen des stimmberechtigten Teilnehmers. Ausführungsformen können den Vorteil haben, dass namentliche Abstimmungen ermöglicht werden. Es wird ermöglicht Inhalte, d.h. Anträge, und echte Identitäten der abstimmenden Personen kryptographisch miteinander zu verknüpfen. Beispielsweise kann jeder Teilnehmer sehen, wer wie abgestimmt hat.

Nach Ausführungsformen wird von dem Abstimmungsverwaltungsgerät für die gesendeten Abstimmungsaufforderungen jeweils ein erstes Zeitintervall vorgegeben für den Empfang der zugehörigen Abstimmungsantwort. Das Verfahren umfasst, falls auf eine der Abstimmungsaufforderungen keine Abstimmungsantwort innerhalb des vorgegeben ersten Zeitintervalls empfangen wird, durch das Abstimmungsverwaltungsgerät ferner:
- Erstellen einer Abstimmungsfehlmeldung, welche den Datensatz der aktuellen Version des Antrags, über welche abzustimmen ist, und den Identifikator des entsprechenden stimmberechtigten Teilnehmers umfasst,
- Senden der Abstimmungsfehlmeldung an das Antragsverwaltungsgerät.

Ausführungsformen können den Vorteil haben, dass für den Abstimmungsprozess ein fester zeitlicher Rahmen in Form des ersten Zeitintervalls vorgegeben werden kann. Ferner kann anhand der Abstimmungsfehlmeldungen nachgeprüft werden, dass tatsächlich alle stimmberechtigten Teilnehmer zur Stimmabgabe aufgefordert wurden und mithin die Möglichkeit hatte abzustimmen.

Nach Ausführungsformen wird eine Abstimmungsfehlmeldung im Zuge der Auszählung des Abstimmungsergebnisses als eine Enthaltung gewertet.

Nach Ausführungsformen umfasst die Abstimmungsaufforderungen jeweils eine Zeitinformation über den Beginn des jeweiligen ersten Zeitintervalls. Die Telekommunikationsendgeräte verwenden die Zeitinformation jeweils zu Anzeigen eines Ablaufs des ersten Zeitintervalls zum Beantworten der Abstimmungsaufforderung. Ausführungsformen können den Vorteil haben, dass den jeweiligen Nutzern auf den Telekommunikationsendgeräten das ablaufende erste Zeitintervall angezeigt werden kann, beispielsweise in Form eines Countdowns. Somit wissen die jeweiligen Nutzer, wie lange sie Zeithaben zum abgeben ihrer Stimme. Bei der Zeitinformation handelt es sich beispielsweise um einen Zeitstempel der Erstellung der jeweiligen Abstimmungsaufforderung und/oder eine Angabe des ersten Zeitintervalls.

Nach Ausführungsformen zeigen die Telekommunikationsendgeräte auf den Erhalt der Abstimmungsaufforderungen jeweils einen Ablauf eines vordefinierten zweiten Zeitintervalls zum Beantworten der Abstimmungsaufforderung an, welches kürzer als das erste Zeitintervall ist. Ausführungsformen können den Vorteil haben, dass den jeweiligen Nutzern auf den Telekommunikationsendgeräten ein Zeitintervall zum Abgeben ihrer Stimme vorgegeben werden kann, beispielsweise in Form eines Countdowns, ohne dass Zeitinformationen zwischen Abstimmungsverwaltungsgerät und der Mehrzahl der Telekommunikationsendgeräte übertragen werden müssen.

Nach Ausführungsformen handelt es sich bei den individuellen Codes jeweils um Zufallswerte oder Pseudo-Zufallswerte. Beispielsweise kann das Abstimmungsverwaltungsgerät hierfür eine hardwareimplementierte Binary Symmetric Source (BSS) aufweisen, die Zufallswerte maximaler Entropie liefert. Alternativ kann das Abstimmungsverwaltungsgerät einen softwareimplementierten Zufallsgenerator aufweisen, der Pseudo-Zufallswerte liefert.

Nach Ausführungsformen handelt es sich bei dem zweiten Kommunikationskanal um einen verschlüsselten Kommunikationskanal. Ausführungsformen können den Vorteil haben, dass die Kommunikation zwischen Telekommunikationsendgerät und Abstimmungsverwaltungsgerät vor unberechtigten Zugriffen Dritter geschützt werden kann. Beispielsweise wird die Kommunikation über den zweiten Kommunikationskanal mittels eines symmetrischen kryptographischen Sitzungsschlüssels verschlüsselt. Beispielsweise ist der zweite Kommunikationskanal mittels einer Ende-zu-Ende-Verschlüsselung verschlüsselt. Beispielsweise handelt es sich bei dem zweiten Kommunikationskanal um eine verschlüsselte Internet-Session zwischen dem jeweiligen Telekommunikationsendgerät und dem Abstimmungsverwaltungsgerät. Nach einer Ausführungsform erfolgt die Sicherung des zweiten Kommunikationskanals auf der Anwendungsschicht ("Application Layer") oder der Transportschicht ("Transport Layer") mittels symmetrischer oder asymmetrischer Verschlüsselung. Nach Ausführungsformen handelt es sich bei der zweiten Kommunikationskanal um eine HTTPS-Session.

Nach Ausführungsformen müssen sich die Nutzer der Telekommunikationsendgeräte zum Erstellen einer Abstimmungsantwort zunächst gegenüber dem jeweiligen Telekommunikationsendgerät authentifizieren. Beispielsweise ist die Authentifizierung zudem eine Voraussetzung zum Aufbau des zweiten Kommunikationskanals. Die Authentifizierung erfolgt beispielsweise durch die Eingabe einer Personal Identification Number (PIN), die der Nutzer über eine Eingabevorrichtung, wie eine Tastatur oder ein Touchdisplay des Telekommunikationsendgeräts, eingibt. Das Telekommunikationsendgerät vergleicht die eingegebene PIN mit einem Referenzwert der PIN, der zum Beispiel auf der SIM-Karte, die sich in einem Kartenleser des Telekommunikationsendgeräts befindet, gespeichert ist. Bei Übereinstimmung der eingegebenen PIN mit der auf der SIM-Karte gespeicherten Referenz-PIN gilt der Nutzer als authentifiziert und das Telekommunikationsendgerät wird entsperrt, sodass der Nutzer dessen Funktionen nutzen kann. Hierdurch wird sichergestellt, dass für die 2-Faktor-Authentifizierung nicht nur der Besitz des Telekommunikationsendgeräts nachgewiesen wird, sondern der Besitz durch den stimmberechtigten Teilnehmer als autorisierten Nutzer, dem das Telekommunikationsendgerät zugeordnet ist, und der alleine Kenntnis von der PIN zum Entsperren seines Telekommunikationsendgeräts besitzt. Zur weiteren Erhöhung der Sicherheit kann vorgesehen sein, dass sich der stimmberechtigte Teilnehmer zunächst bei dem Abstimmungsverwaltungsgerät anmelden muss, beispielsweise durch Eingabe eines Nutzernamens und Passworts.

Nach Ausführungsformen wird der individuelle Code nicht über den zweiten Kommunikationskanal, etwa eine verschlüsselte Internet-Session, von dem Abstimmungsverwaltungsgerät an das jeweilige Telekommunikationsendgerät übertragen, sondern über einen davon separaten Kanal, beispielsweise über einen Seitenkanal des Mobilfunknetzes, etwa in Form einer SMS-Nachricht. Dadurch kann sichergestellt, dass dasjenige Telekommunikationsendgerät, von dem aus der zweite Kommunikationskanal mit dem Abstimmungsverwaltungsgerät aufgebaut wird und von dem aus die Abstimmungsantwort empfangen wird, dasselbe Telekommunikationsendgerät ist, zu dem das Abstimmungsverwaltungsgerät den individuellen Code sendet. Denn der Empfang des individuellen Codes ist nur möglich, wenn sich der stimmberechtigte Teilnehmer der virtuellen Konferenz tatsächlich im Besitz des ihm zugeordneten Telekommunikationsendgeräts befindet.

Nach Ausführungsformen handelt es sich bei dem ersten Kommunikationskanal um einen Seitenkanal eines Mobilfunknetzes, über welchen SMS-Nachricht gesendet werden. Nach Ausführungsformen handelt es sich bei dem ersten Kommunikationskanal um einen Seitenkanal eines Mobilfunknetzes handelt, über welchen automatisch generierte Sprachnachrichten gesendet werden. Ausführungsformen können den Vorteil haben, dass der individuelle Code unabhängig von dem zweiten Kommunikationskanal an des Telekommunikationsendgerät übertragen werden kann. Somit kann der der individuelle Code einen unabhängigen Nachweis über den Besitz des Telekommunikationsendgeräts darstellen.

Nach Ausführungsformen kommuniziert das Abstimmungsverwaltungsgerät mit dem Antragsverwaltungsgerät über eine verschlüsselte dritte Kommunikationskanal. Ausführungsformen können den Vorteil haben, dass die Kommunikation zwischen Abstimmungsverwaltungsgerät und Antragsverwaltungsgerät vor unberechtigten Zugriffen Dritter geschützt werden kann. Beispielsweise wird die Kommunikation über den dritten Kommunikationskanal mittels eines symmetrischen kryptographischen Sitzungsschlüssels verschlüsselt. Beispielsweise ist der dritte Kommunikationskanal mittels einer Ende-zu-Ende-Verschlüsselung verschlüsselt.

Nach Ausführungsformen umfasst der Datensatz der aktuellen Version des Antrags einen Identifikator der aktuellen Version des Antrags. Ausführungsformen können den Vorteil haben, dass anhand des Identifikators, etwa eines Identifikators des Antrags und/oder einer Versionskennung, bestimmt werden kann, über welche Version, welchen Antrags abgestimmt wird.

Nach Ausführungsformen umfassen die Abstimmungsaufforderungen jeweils den Identifikator der aktuellen Version des Antrags zum Anzeigen auf einer Anzeigevorrichtung des die jeweilige Abstimmungsaufforderung empfangenden Telekommunikationsendgeräts. Ausführungsformen können den Vorteil haben, dass für die jeweiligen Nutzer anhand der Anzeige, etwa in Form einer graphischen Nutzeroberfläche, ersichtlich ist, worüber sie abstimmen.

Nach Ausführungsformen umfasst der Datensatz der aktuellen Version des Antrags einen Hashwert der aktuellen Version des Antrags. Nach Ausführungsformen umfassen die Abstimmungsaufforderungen jeweils Hashwert der aktuellen Version des Antrags zum Anzeigen auf einer Anzeigevorrichtung des die jeweilige Abstimmungsaufforderung empfangenden Telekommunikationsendgeräts.

Nach Ausführungsformen umfasst der Datensatz der aktuellen Version des Antrags eine Kopie zumindest eines Teils der aktuellen Version des Antrags, beispielsweise einer ersten Seite der aktuellen Version des Antrags. Ausführungsformen können den Vorteil haben, dass im Detail bestimmt werden kann, worüber genau abgestimmt wird. Nach Ausführungsformen umfasst der Datensatz der aktuellen Version des Antrags eine vollständige Kopie der aktuellen Version des Antrags.

Beispielsweise wird die Kopie der aktuellen Version des Antrags von dem Abstimmungsverwaltungsgerät für die Telekommunikationsendgeräte zum Herunterladen über die zweiten Kommunikationskanäle bereitgestellt. Beispielsweise laden die Telekommunikationsendgeräte die Kopie der aktuellen Version des Antrags auf einen empfang der jeweiligen Abstimmungsaufforderung herunter. Hierzu umfasst die Abstimmungsaufforderung beispielsweise einen Identifikator der aktuellen Version des Antrags, welcher zum Identifizieren der herunterzuladenden Kopie der aktuellen Version des Antrags verwendet wird.

Nach Ausführungsformen werden Kopien der aktuellen Version des Antrags für die stimmberechtigten Teilnehmer jeweils in Speicherbereichen des Abstimmungsverwaltungsgerät bereitgestellt, welche jeweils nur für den ihnen zugeordneten bei dem Abstimmungsverwaltungsgerät angemeldeten stimmberechtigten Teilnehmer zugänglich sind. Die Kopien können beispielsweise jeweils an die entsprechenden Telekommunikationsendgeräte übertragen und dort auf einer Anzeigevorrichtung angezeigt werden. Die Nutzer können die entsprechenden Kopien der aktuellen Version des Antrags, über welche abzustimmen ist, somit vor dem Abstimmen nochmals im Detail prüfen und sich versichern, dass es sich tatsächlich um die korrekte Version handelt.

Nach Ausführungsformen umfassen die Abstimmungsaufforderungen jeweils die Kopie zumindest eines Teils der aktuellen Version des Antrags, beispielsweise einer ersten Seite der aktuellen Version des Antrags, zum Anzeigen auf einer Anzeigevorrichtung des die jeweilige Abstimmungsaufforderung empfangenden Telekommunikationsendgeräts. Nach Ausführungsformen umfassen die Abstimmungsaufforderungen jeweils eine vollständige Kopie der aktuellen Version des Antrags. Ausführungsformen können den Vorteil haben, dass für die jeweiligen Nutzer anhand der Anzeige, etwa in Form einer graphischen Nutzeroberfläche, im Detail nachprüfbar ist, worüber sie genau abstimmen.

Nach Ausführungsformen umfasst das Verfahren für jede der empfangenen Abstimmungsanfragen durch das Abstimmungsverwaltungsgerät zusätzlich zum Senden der jeweiligen Abstimmungsaufforderung über den ersten Kommunikationskanal ein Senden einer zusätzlichen Abstimmungsinformation über den zweiten Kommunikationskanal an das Telekommunikationsendgerät, welches dem stimmberechtigten Teilnehmer des identifizierten Nutzerkontos zugeordnet ist, zum Anzeigen auf einer Anzeigevorrichtung des die entsprechende Abstimmungsinformation empfangenden Telekommunikationsendgeräts. Diese Abstimmungsinformationen können von dem Telekommunikationsendgerät beispielsweise zum Erstellen der jeweiligen Abstimmungsantwort verwendet werden. Beispielsweise umfasst die Abstimmungsanfrage neben dem jeweiligen individuellen Code einen Identifikator der aktuellen Version des Antrags. Anhand dieses Identifikators kann durch den stimmberechtigten Teilnehmer beispielsweise bestimmt werden, welchem Antrag bzw. welchem stimmberechtigten Teilnehmer der entsprechende Code zugeordnet ist. Umfasst die Abstimmungsinformation ebenfalls den Identifikator der aktuellen Version des Antrags, kann der stimmberechtigte Teilnehmer beispielsweise anhand des Identifikators die Abstimmungsaufforderung und damit den von dieser umfassten individuellen Code der Abstimmungsinformation zuordnen. Umfasst die Abstimmungsinformation weitere inhaltliche Informationen zur aktuellen Version des Antrags, beispielsweise eine Kopie zumindest eines Teils der aktuellen Version des Antrags, kann der stimmberechtigte Teilnehmer die Abstimmungsaufforderung und damit den von dieser umfassten individuellen Code der Abstimmungsinformation zudem den inhaltlichen Informationen der aktuellen Version des Antrags zuordnen. Mit anderen Worten erfolgt eine inhaltliche Zuordnung zu dem Gegenstand der Abstimmung, d.h. der Teilnehmer kann feststellen, worüber er abstimmt.

Nach Ausführungsformen umfassen die zusätzlichen Abstimmungsinformationen jeweils die Kopie zumindest eines Teils der aktuellen Version des Antrags, beispielsweise einer ersten Seite der aktuellen Version des Antrags, zum Anzeigen auf einer Anzeigevorrichtung des die jeweilige Abstimmungsaufforderung empfangenden Telekommunikationsendgeräts. Nach Ausführungsformen umfassen die zusätzlichen Abstimmungsinformationen jeweils eine vollständige Kopie der aktuellen Version des Antrags. Ausführungsformen können den Vorteil haben, dass für die jeweiligen Nutzer anhand der Anzeige, etwa in Form einer graphischen Nutzeroberfläche, im Detail nachprüfbar ist, worüber sie genau abstimmen. Ein zusätzliches Übertragen zusätzlicher Abstimmungsinformation über den zweiten Kommunikationskanal kann zudem vorteilhaft sein, falls eine über den ersten Kommunikationskanal übertragbare Datenmenge, insbesondere eine als eine Nachricht übertagbare Datenmenge, begrenzt ist. Beispielsweise ist eine über den ersten Kommunikationskanal übertragbare Datenmenge, insbesondere die als eine Nachricht übertagbare Datenmenge, geringer als eine über den zweiten Kommunikationskanal übertragbare Datenmenge, insbesondere eine als eine Nachricht übertagbare Datenmenge.

Nach Ausführungsformen umfasst der Datensatz der aktuellen Version des Antrags eine Signatur der aktuellen Version des Antrags mit einem privaten kryptographischen Schlüssel des Antragsverwaltungsgeräts als Signaturschlüssel. Ausführungsformen können den Vorteil haben, dass anhand der Signatur die Authentizität der aktuellen Version, über welche abgestimmt wird, belegt werden kann.

Nach Ausführungsformen setzt eine Verarbeitung der Abstimmungsanfragen durch das Abstimmungsverwaltungsgerät jeweils eine erfolgreiche Signaturprüfung der von dem Datensatz der aktuellen Version des Antrags umfassten Signatur der aktuellen Version des Antrags mit einem öffentlichen kryptographischen Schlüssel des Antragsverwaltungsgeräts als Signaturprüfschlüssel voraus. Ausführungsformen können den Vorteil haben, dass seitens des Abstimmungsverwaltungsgeräts sichergestellt werden kann, dass tatsächlich über eine von dem Antragsverwaltungsgerät bereitgestellte authentische Version des Antrags abgestimmt wird. Beispielsweise ist der öffentlichen kryptographischen Schlüssel des Antragsverwaltungsgeräts in dem Abstimmungsverwaltungsgerät gespeichert. Beispielsweise sendet das Antragsverwaltungsgeräts zum Bereitstellen des kryptographischen Schlüssels des Antragsverwaltungsgeräts ein Zertifikat, beispielsweise ein PKI-basiertes Zertifikat, mit dem öffentlichen kryptographischen Schlüssel des Antragsverwaltungsgeräts an das Abstimmungsverwaltungsgerät.

Nach Ausführungsform erfolgt für die stimmberechtigten Teilnehmer jeweils eine initiale Registrierung bei dem Abstimmungsverwaltungsgerät mithilfe von ID-Token der jeweiligen stimmberechtigten Teilnehmer der virtuellen Konferenz. Beispielsweise handelt es sich bei den entsprechenden ID-Token um elektronische Ausweisdokumente der stimmberechtigten Teilnehmer der virtuellen Konferenz, wie etwa deren elektronische Personalausweise. Die ID-Token der stimmberechtigten Teilnehmer der virtuellen Konferenz umfassen beispielweise jeweils einen geschützten Speicherbereich, in dem Attributwerte von Attributen des jeweiligen stimmberechtigten Teilnehmers gespeichert sind, wie zum Beispiel dessen Vorname, Name, Adresse, Geburtsdatum. Diese Attributwerte der stimmberechtigten Teilnehmer der virtuellen Konferenz sollen beispielsweise als Teil des jeweiligen Nutzerkontos des entsprechenden stimmberechtigten Teilnehmers durch das Abstimmungsverwaltungsgerät gespeichert werden, wozu ein sicheres und vertrauenswürdiges Auslesen und Übertragung dieser Attributwerte an das Abstimmungsverwaltungsgerät erforderlich ist. Die initialen Registrierungen der stimmberechtigten Teilnehmer der virtuellen Konferenz erfolgen beispielsweise im Vorfeld der virtuellen Konferenz und der Abstimmung.

Nach Ausführungsformen umfasst eine initiale Registrierung eines stimmberechtigten Teilnehmers der virtuellen Konferenz durch das Abstimmungsverwaltungsgerät:
- Authentifizierung des stimmberechtigten Teilnehmers gegenüber einem dem stimmberechtigten Teilnehmer zugeordneten ID-Token, wobei der ID-Token einen geschützten Speicherbereich aufweist, in dem Attributwerte von Attributen des stimmberechtigten Teilnehmers gespeichert sind,
- Authentifizierung des Abstimmungsverwaltungsgeräts über ein Netzwerk, beispielsweise das Internet, gegenüber dem ID-Token,
- Aufbau einer Verbindung mit Ende-zu-Ende-Verschlüsselung zwischen dem Abstimmungsverwaltungsgerät und dem ID-Token über das Netzwerk und das Telekommunikationsendgerät,
- Übertragung der Attributwerte des stimmberechtigten Teilnehmers von dem ID-Token über die Verbindung mit Ende-zu-Ende-Verschlüsselung an das Abstimmungsverwaltungsgerät,
- Speicherung der von dem ID-Token empfangenen Attributwerte des stimmberechtigten Teilnehmers in einem dem stimmberechtigten Teilnehmer zugeordneten Nutzerkonto auf dem Abstimmungsverwaltungsgerät zur Durchführung der initialen Registrierung des Nutzers durch das Abstimmungsverwaltungsgerät.

Im Zuge der initialen Registrierung authentifiziert sich der zu registrierende stimmberechtigten Teilnehmer der virtuellen Konferenz zunächst gegenüber dem ID-Token. Dies kann beispielsweise durch Eingabe von Authentifizierungsdaten bzw. Authentifizierungsinformationen des stimmberechtigten Teilnehmers in das Telekommunikationsendgerät erfolgen, welche über eine lokale Verbindung, die zwischen dem Telekommunikationsendgerät und dem ID-Token aufgebaut wird, wie zum Beispiel über eine RFID- oder NFC-Verbindung, an den ID-Token weitergeleitet werden oder durch Erfassung der Authentifizierungsinformationen des stimmberechtigten Teilnehmers unmittelbar durch den ID-Token, der hierzu beispielsweise einen biometrischen Sensor für eine biometrische Authentifizierung aufweisen kann.

Ferner authentifiziert sich das Abstimmungsverwaltungsgerät über ein Netzwerk, beispielsweise das Internet, gegenüber dem ID-Token, etwa mithilfe eines Zertifikats und/oder eines Berechtigungszertifikats. Das Zertifikat kann nach einem Public Key Infrastruktur (PKI) Standard erstellt worden sein, beispielsweise nach dem X.509 Standard. Nachdem sich sowohl der stimmberechtigte Teilnehmer als auch das Abstimmungsverwaltungsgerät erfolgreich gegenüber dem ID-Token authentifiziert haben, erfolgt der Aufbau einer Verbindung mit Ende-zu-Ende-Verschlüsselung zwischen dem Abstimmungsverwaltungsgerät und dem ID-Token, welche über das Netzwerk und das Telekommunikationsendgerät, d.h. die zwischen dem Telekommunikationsendgerät und dem ID-Token aufgebaute lokale Verbindung, verläuft. Über diese Verbindung mit Ende-zu-Ende-Verschlüsselung können die Attributwerte des stimmberechtigten Teilnehmers von dem ID-Token an das Abstimmungsverwaltungsgerät übertragen und dort zum Anlegen in eine Nutzerkonto des stimmberechtigten Teilnehmers der virtuellen Konferenz gespeichert werden.

Die Authentifizierung eines stimmberechtigten Teilnehmers der virtuellen Konferenz gegenüber dem ID-Token des stimmberechtigten Teilnehmers kann beispielsweise folgende Schritte umfassen:
- Erfassen eines biometrischen Merkmales des stimmberechtigten Teilnehmers durch einen biometrischen Sensor,
- Vergleich des erfassten biometrischen Merkmals mit einem auf dem ID-Token gespeicherten biometrischen Merkmals des stimmberechtigten Teilnehmers durch den ID-Token, und
- Authentifizieren des stimmberechtigten Teilnehmers, wenn das erfasste biometrische Merkmal mit dem gespeicherten biometrischen Merkmal übereinstimmt.

Bei dem biometrischen Sensor kann es sich beispielsweise um einen biometrischen Sensor des ID-Token oder einen biometrischen Sensor des Telekommunikationsendgeräts handeln, welches das erfasste biometrische Merkmal an den ID-Token weiterleitet.

Beispielsweise werden durch das Telekommunikationsendgerät in einem ersten Schritt in dem ID-Token des stimmberechtigten Teilnehmers der virtuellen Konferenz gespeicherte biometrische Merkmale und Attributwerte des stimmberechtigten Teilnehmers aus einem ID-Token erfasst und über eine Ende-zu-Ende-Verschlüsselung an das Abstimmungsverwaltungsgerät übertragen.

Anschließend werden die zu den gespeicherten biometrischen Merkmalen korrespondierenden biometrischen Merkmale des stimmberechtigten Teilnehmers durch das Telekommunikationsendgerät erfasst und über eine Ende-zu-Ende-Verschlüsselung an das Abstimmungsverwaltungsgerät übertragen.

Auf dem Abstimmungsverwaltungsgerät erfolgt ein Vergleich der gespeicherten biometrischen Merkmale mit den erfassten biometrischen Merkmalen des stimmberechtigten Teilnehmers der virtuellen Konferenz. Stimmen die verglichen Merkmale miteinander überein, wird der stimmberechtigten Teilnehmers authentifiziert. Abschließend können weitere Attributwerte des stimmberechtigten Teilnehmers erfasst und in dem Nutzerkonto des stimmberechtigten Teilnehmers auf dem Abstimmungsverwaltungsgerät gespeichert werden.

Alternativ kann die initiale Registrierung des stimmberechtigten Teilnehmers mithilfe eines sogenannten Video-Ident-Verfahrens erfolgen. Die initiale Registrierung des stimmberechtigten Teilnehmers der virtuellen Konferenz kann alternativ mit einem eingeführten Verfahren wie Post-Ident oder anderen Identverfahren durchgeführt werden.

Der ID-Token kann beispielsweise ein Ausweisdokument sein, auf dem ein Lichtbild des stimmberechtigten Teilnehmers der virtuellen Konferenz abgebildet ist, welchem das Ausweisdokument zugeordnet ist, und/oder andere biometrische Merkmale wie etwa Fingerabdrücke. Diese Merkmale können beispielsweise mit einer Kamera des Telekommunikationsendgeräts des stimmberechtigten Teilnehmers erfasst werden. Anschließend werden durch die Kamera oder einen anderen biometrischen Sensor des Telekommunikationsendgeräts die korrespondierenden biometrischen Merkmale des stimmberechtigten Teilnehmers erfasst, beispielsweise, indem dieser sein Gesicht vor die Kamera hält. Der Vergleich der biometrischen Merkmale kann, abhängig von der Art der Merkmale automatisiert erfolgen.

Die Attributwerte können gemeinsam mit den biometrischen Merkmalen ausgelesen werden oder erst nach erfolgreicher Identifizierung übermittelt werden, beispielsweise von einem ID-Token ausgelesen werden.

Ausführungsformen umfassen ferner ein Abstimmungsverwaltungsgerät für eine virtuelle Konferenz zum kryptographisch gesicherten Abstimmen über einen Antrag. Das Abstimmungsverwaltungsgerät ist konfiguriert zum:
- Empfangen einer Mehrzahl von Abstimmungsanfragen von dem Antragsverwaltungsgerät, wobei die Mehrzahl von Abstimmungsanfragen eine Abstimmungsanfrage für jeden der stimmberechtigten Teilnehmer umfasst, wobei die Abstimmungsanfragen der Mehrzahl von Abstimmungsanfragen jeweils einen Identifikator des stimmberechtigten Teilnehmers umfassen, welchem sie zugeordnet sind, sowie einen Datensatz einer aktuellen Version des Antrags, über welche abzustimmen ist.

Ferner ist das Abstimmungsverwaltungsgerät für jede der empfangenen Abstimmungsanfragen konfiguriert zum:
- Identifizieren eines von dem Abstimmungsverwaltungsgerät verwalteten Nutzerkontos des stimmberechtigten Teilnehmers, welchem die Abstimmungsanfrage zugeordnet ist, unter Verwendung des von der Abstimmungsanfrage umfassten Identifikators, wobei das Nutzerkonto einen dem stimmberechtigten Teilnehmer zugeordneten privaten kryptographischen Schlüssel umfasst,
- Erzeugen eines individuellen Codes für den stimmberechtigten Teilnehmer, welchem die Abstimmungsanfrage zugeordnet ist,
- Senden einer den erzeugten individuellen Codes umfassenden Abstimmungsaufforderung über einen ersten Kommunikationskanal an das Telekommunikationsendgerät, welches dem stimmberechtigten Teilnehmer des identifizierten Nutzerkontos zugeordnet ist, unter Verwendung von Verbindungsinformationen des Telekommunikationsendgeräts, welche das identifizierte Nutzerkonto umfasst,
- Empfangen einer Abstimmungsantwort auf die gesendete Abstimmungsaufforderung von dem Telekommunikationsendgerät über einen zweiten Kommunikationskanal, wobei die Abstimmungsantwort den gesendeten individuellen Code der Abstimmungsaufforderung, eine Authentifizierungsinformation des Nutzers des Telekommunikationsendgeräts sowie eine Abstimmungserklärung des Nutzers des Telekommunikationsendgeräts umfasst, wobei es sich bei dem ersten Kommunikationskanal um einen zu dem zweiten Kommunikationskanal separaten und/oder separat gesicherten Seitenkanal handelt,
- Prüfen der Validität des empfangenen Codes und der empfangenen Authentifizierungsinformation, wobei das Prüfen der Validität einen Vergleich des empfangenen Codes auf Übereinstimmung mit dem gesendeten individuellen Code umfasst und einen Vergleich der empfangenen Authentifizierungsinformation auf Übereinstimmung mit einer von dem Nutzerkonto umfassten Authentifizierungsinformation des stimmberechtigten Teilnehmers,
- auf eine erfolgreiche Prüfung hin, Signieren einer Kombination, welche den Datensatz der aktuellen Version des Antrags, über welche abzustimmen ist, den Identifikator des stimmberechtigten Teilnehmers und die Abstimmungserklärung des Nutzers des Telekommunikationsendgeräts umfasst, unter Verwendung des privaten kryptographischen Schlüssels des stimmberechtigten Teilnehmers,
- Senden der signierten Kombination an das Antragsverwaltungsgerät zum Prüfen der Signatur der Kombination unter Verwendung eines öffentlichen kryptographischen Schlüssels des stimmberechtigten Teilnehmers, zum Speichern zusammen mit der aktuellen Version des Antrags und zum Auszählen des Abstimmungsergebnisses unter Verwendung der von der signierten Kombination umfassten Abstimmungserklärung.

Nach Ausführungsformen ist das Abstimmungsverwaltungsgerät dazu konfiguriert jede der zuvor beschriebenen Ausführungsformen des Verfahrens zum kryptographisch gesicherten Abstimmen über einen Antrag für eine virtuelle Konferenz auszuführen.

Ausführungsformen umfassen ferner ein Antragsverwaltungsgerät für eine virtuelle Konferenz zum kryptographisch gesicherten Abstimmen über einen Antrag. Das Antragsverwaltungsgerät ist konfiguriert zum:
- Erstellen einer aktuellen Version des Antrags, über welche abzustimmen ist,
- Bereitstellen einer Aufstellung aller stimmberechtigten Teilnehmer der virtuellen Konferenz, wobei die Aufstellung für jeden der stimmberechtigten Teilnehmer jeweils einen Identifikator sowie einen öffentlichen kryptographischen Schlüssel umfasst,
- Erstellen einer Mehrzahl von Abstimmungsanfragen, wobei die Mehrzahl von Abstimmungsanfragen eine Abstimmungsanfrage für jeden der stimmberechtigten Teilnehmer umfasst, wobei die Abstimmungsanfragen der Mehrzahl von Abstimmungsanfragen jeweils den Identifikator des stimmberechtigten Teilnehmers umfassen, welchem sie zugeordnet sind, sowie einen Datensatz der aktuellen Version des Antrags, über welche abzustimmen ist,
- Senden der Mehrzahl von Abstimmungsanfragen an ein Abstimmungsverwaltungsgerät,
- in Antwort auf die Mehrzahl von Abstimmungsanfragen, Empfangen einer Mehrzahl von signierten Kombinationen, welche jeweils den Datensatz der aktuellen Version des Antrags, über welche abzustimmen ist, einen Identifikator eines stimmberechtigten Teilnehmers und eine Abstimmungserklärung eines Nutzers eines Telekommunikationsendgeräts umfasst, welches in einem Nutzerkonto des von dem Identifikator identifizierten stimmberechtigten Teilnehmers registriert ist,
- Prüfen der Signaturen der Kombinationen unter Verwendung der öffentlichen kryptographischen Schlüssel der stimmberechtigten Teilnehmer,
- jeweils auf eine erfolgreiche Signaturprüfung hin, Speichern der jeweiligen Kombination zusammen mit der aktuellen Version des Antrags,
- Auszählen des Abstimmungsergebnisses unter Verwendung der von den signierten Kombinationen umfassten Abstimmungserklärungen,
- Speichern des Abstimmungsergebnisses zusammen mit der aktuellen Version des Antrags.

Nach Ausführungsformen ist das Antragsverwaltungsgerät dazu konfiguriert jede der zuvor beschriebenen Ausführungsformen des Verfahrens zum kryptographisch gesicherten Abstimmen über einen Antrag für eine virtuelle Konferenz auszuführen.

Ausführungsformen umfassen ferner ein Abstimmungssystem für eine virtuelle Konferenz zum kryptographisch gesicherten Abstimmen über einen Antrag, wobei das Abstimmungssystem ein Abstimmungsverwaltungsgerät nach einer der voranstehenden Ausführungsformen eines Abstimmungsverwaltungsgeräts und ein Antragsverwaltungsgerät nach einer der voranstehenden Ausführungsformen eines Antragsverwaltungsgeräts umfasst.

Nach Ausführungsformen ist das Abstimmungssystem dazu konfiguriert jede der zuvor beschriebenen Ausführungsformen des Verfahrens zum kryptographisch gesicherten Abstimmen über einen Antrag für eine virtuelle Konferenz auszuführen.

Ausführungsformen umfassen ferner ein System umfassend ein Abstimmungssystem nach einer der voranstehenden Ausführungsformen eines Abstimmungssystems sowie eine Mehrzahl von Telekommunikationsendgeräten, welche jeweils einem der stimmberechtigten Teilnehmer der virtuellen Konferenz zugeordnet sind. Die Telekommunikationsendgeräte sind jeweils konfiguriert sind zum:
- Empfangen einer Abstimmungsaufforderung von dem Abstimmungsverwaltungsgerät, welche einen für den stimmberechtigten Teilnehmer, welchem das Telekommunikationsendgerät zugeordnet ist, erzeugten individuellen Code umfasst über einen ersten Kommunikationskanal,
- Anzeigen zumindest Teile der empfangenen Abstimmungsaufforderung unter Verwendung einer Anzeigevorrichtung des Telekommunikationsendgeräts,
- Empfangen einer Nutzereingabe unter Verwendung einer Eingabevorrichtung des Telekommunikationsendgeräts, wobei die Nutzereingabe eine Authentifizierungsinformation und eine Abstimmungserklärung des Nutzers des Telekommunikationsendgeräts umfasst,
- Erstellen einer Abstimmungsantwort auf die empfangene Abstimmungsaufforderung, wobei die Abstimmungsantwort den empfangenen individuellen Code der Abstimmungsaufforderung, die empfangene Authentifizierungsinformation und die empfangene Abstimmungserklärung umfasst,
- Senden der Abstimmungsantwort über einen zweiten Kommunikationskanal an das Abstimmungsverwaltungsgerät, wobei es sich bei dem ersten Kommunikationskanal um einen zu dem zweiten Kommunikationskanal separaten und/oder separat gesicherten Seitenkanal handelt.

Nach Ausführungsformen ist das System dazu konfiguriert jede der zuvor beschriebenen Ausführungsformen des Verfahrens zum kryptographisch gesicherten Abstimmen über einen Antrag für eine virtuelle Konferenz auszuführen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Verund/oder Entschlüsselung von Daten verwendet wird und veröffentlicht, d.h. an Dritte weitergegeben, werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, welche sich nur mit dem privaten Schlüssel entschlüsseln lassen. Ferner ermöglicht es der öffentliche Schlüssel jedermann digitale mit dem privaten Schlüssel erstellte Signaturen zu prüfen. Bei einer entsprechenden digitalen Signatur handelt es sich beispielsweise um einen mit dem privaten Schlüssel als Signierschlüssel verschlüsselten Hashwert der zu signierenden Daten. Mit dem öffentlichen Schlüssel als Signaturprüfschlüssel kann der so verschlüsselte Hash entschlüsselt und die Signatur auf ihre Gültigkeit geprüft werden. Ein privater Schlüssel ermöglicht es seinem Inhaber, mit dem öffentlichen Schlüssel für den Inhaber des privaten Schlüssels verschlüsselte Daten zu entschlüsseln oder digitale Signaturen zu erstellen. Eine mit einem privaten Schlüssel als Signierschlüssel erstellte Signatur kann mit dem zugehörigen öffentlichen Schlüssel als Signaturprüfschlüssel verifiziert werden.

Unter einer "Signatur" bzw. einer "elektronischen Signatur" wird hier eine einfache elektronische Signatur, eine fortgeschrittene elektronische Signatur oder eine qualifizierte elektronische Signatur verstanden, wobei letztere auf einem zum Zeitpunkt ihrer Erzeugung gültigen qualifizierten Zertifikat beruht und mit einer sicheren Signaturerstellungseinheit erstellt werden muss, um höchsten Anforderungen an die Sicherheit zu genügen. Bei einer Signatur kann es sich zum Beispiel um eine mit einem privaten kryptographischen Schlüssel verschlüsselten Hashwert der Ausgangsdaten handeln.

Die Authentizität der übertragenen Abstimmungsantwort, d.h. der Kombination aus Abstimmungserklärung, individuellem Code und Authentifizierungsinformation, beispielsweise durch Verwendung eines Message Authentication Codes (MAC) sichergestellt werden. Ein MAC wird beispielsweise unter Verwendung eines MAC-Algorithmus berechnet, welchem zu schützende Daten, d.h. die Daten der Abstimmungsantwort, und ein kryptographischer Schlüssel, beispielsweise ein symmetrischer kryptographischer Schlüssel, wie etwa ein ephemerere Sitzungsschlüssel des zweiten Kommunikationskanals, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptographische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung der Abstimmungsantwort, wird zwischen Sender, beispielsweise einem Telekommunikationsendgeräts, und Empfänger, beispielsweise dem Abstimmungsverwaltungsgerät, ein kryptographischer Schlüssel, beispielsweise ein symmetrischer kryptographischer Schlüssel in Form eines ephemeren Sitzungsschlüssels, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC berechnet ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Unter einem "Hochsicherheitsmodul" (HSM), welches auch als Hardware-Sicherheitsmodul oder Hardware Security Modul bezeichnet wird, wird hier ein Peripheriegerät, insbesondere ein (internes oder externes) Peripheriegerät, für die Speicherung eines kryptographischen Schlüssels und die Ausführung kryptographischer Operationen verstanden. Ein HSM ermöglicht es, die Vertrauenswürdigkeit und die Integrität von Daten und den damit verbundenen Informationen insbesondere in IT-Systemen sicherzustellen. Um die Vertrauenswürdigkeit zu gewährleisten, sollen die zum Einsatz kommenden kryptographischen Schlüssel sowohl softwaretechnisch als auch gegen physikalische Angriffe oder Seitenkanalangriffe geschützt werden.

Ein HSM sorgt für die Unzugänglichkeit des oder der darin gespeicherten privaten Schlüssel. Der Schutz des privaten Schlüssels kann so weit gehen, dass das HSM bei dem Versuch den privaten Schlüssel auszulesen, sich selbst zerstört oder zumindest derart zurücksetzt, dass der private Schlüssel unwiederbringlich gelöscht wird.

Unter einem "Telekommunikationsendgerät" wird hier ein tragbares, batteriegetriebenes Gerät mit einer Mobilfunk-Schnittstelle verstanden, insbesondere ein Mobiltelefon, ein Smartphone oder ein portabler Computer, wie zum Beispiel ein Laptop, Notebook oder Tablet-PC mit einer Mobilfunk-Schnittstelle. Das Telekommunikationsendgerät kann neben der Mobilfunk-Schnittstelle ein oder mehrere weitere Kommunikations-Schnittstellen für die drahtlose Kommunikation aufweisen, wie zum Beispiel eine Bluetooth- und/oder eine WLAN-Schnittstelle.

Unter einem "Mobilfunknetz" wird hier insbesondere ein digitales zellulares Telekommunikations-Netzwerk verstanden, welches nach einem Mobilfunkstandard, wie z.B. einem GSM-, UMTS-, CDMA- oder einem LTE-Standard arbeitet. Über ein solches Mobilfunknetz kann eine Verbindung mit dem Internet hergestellt werden.

Unter einer "Internet-Session" bzw. einen Kommunikationskanal über das Internet wird hier eine temporäre Kommunikationsverbindung über das Internet verstanden, das heißt eine sogenannte Communication Session. Gemäß dem OSI-Schichtmodell kann sich eine Internet-Session auf die Transportschicht ("Transport Layer") oder die Anwendungsschicht ("Application Layer") beziehen. Insbesondere kann es sich bei einer Internet-Session um eine http-Session oder um eine https-Session handeln, wobei bei letzterer der Transportlayer durch eine symmetrische Verschlüsselung geschützt ist.

Unter einem "Seitenkanal" wird hier ein Kommunikationskanal verstanden, über den separat von einer Internetsession eine Kommunikation erfolgt. Dies kann ein in die Internetsession eingebetteter, separat gesicherter, d.h. verschlüsselter, Kanal sein. Es ist aber auch möglich, dass der Seitenkanal ein Nachrichtenkanal für den Signalisierungsanteil der Kommunikation in einem Mobilfunknetz ist, über den beispielsweise Signalisierungsinformationen zur Steuerung der Gesprächsverbindungen, Roaming-Informationen, Vergebührungsinformationen, Informationen zur Feststellung des Gerätetyps, Short Messages (SMS)-Nachrichten und/oder Sprachnachrichten übertragen werden.

Unter einem "ID-Token" wird hier insbesondere ein tragbares elektronisches Gerät verstanden, das einen Nutzer zugeordnet ist, und welches zumindest einen Datenspeicher zur Speicherung zumindest eines Attributwerts und eine Kommunikations-Schnittstelle zum Auslesen des Attributs aufweist. Vorzugsweise hat der ID-Token einen gesicherten Speicherbereich zur Speicherung des zumindest einen Attributwerts, um zu verhindern, dass der in dem Speicherbereich gespeicherte Attributwert in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Unter einem "Speicher" wird hier insbesondere ein nichtflüchtiger Speicher verstanden. Unter einem "nichtflüchtigen Speicher" wird hier beispielsweise ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor möglich ist. Nach Ausführungsformen ist der Zugriff von dem bzw. über den mit dem Speicher gekoppelten Prozessor nur dann möglich, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln. Eine solche Prüfung kann beispielsweise auf einer elektronischen Signatur mit einem Signaturschlüssel beruhen.

Im Weiteren werden Ausführungsformen der Erfindung mit Bezugnahme auf die Zeichnungen näher erläutert. Es zeigen:
- Figur 1: ein schematisches Blockdiagramm eines exemplarischen Abstimmungssystems für eine virtuelle Konferenz,
- Figur 2: ein schematisches Flussdiagramm eines exemplarischen Verfahrens zum Abstimmen über einen Antrag für eine virtuelle Konferenz,
- Figur 3: ein schematisches Flussdiagramm eines exemplarischen Verfahrens zum Abstimmen über einen Antrag für eine virtuelle Konferenz,
- Figur 4: ein schematisches Flussdiagramm eines exemplarischen Verfahrens zum Abstimmen über einen Antrag für eine virtuelle Konferenz und
- Figur 5: ein schematisches Blockdiagramm eines exemplarischen Abstimmungssystems.

Elemente der nachfolgenden Ausführungsformen, die einander entsprechen, werden mit denselben Bezugszeichen gekennzeichnet.

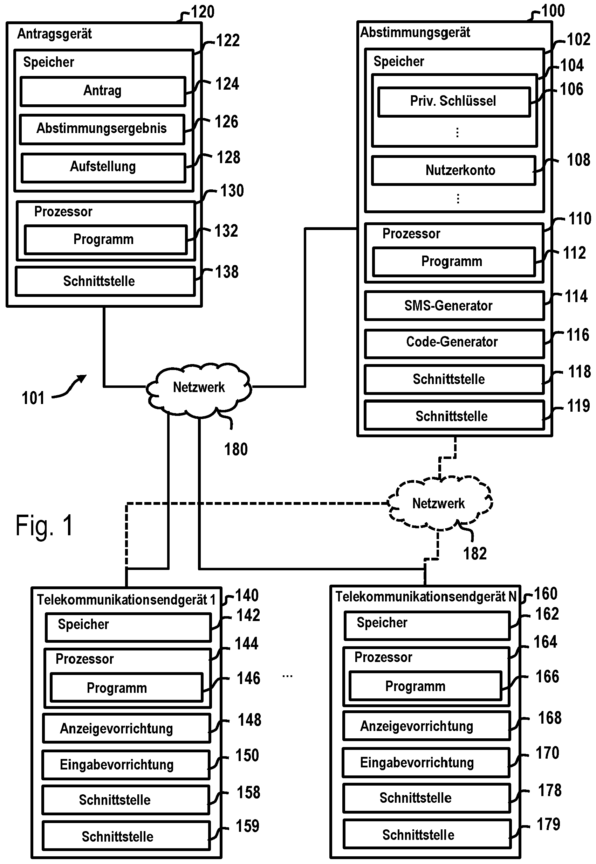

Figur 1 zeigt ein exemplarisches Abstimmungssystem 101 für ein Abstimmen über einen Antrag bei einer virtuellen Konferenz. Das Abstimmungssystem 101 umfasst ein Antragsverwaltungsgerät 120 und ein Abstimmungsverwaltungsgerät 100, welche miteinander über einen Kommunikationskanal kommunizieren. Bei dem Kommunikationskanal kann es sich beispielsweise um eine verschlüsselte Netzwerkverbindung über das Netzwerk 180 handeln. Bei dem Netzwerk 180 kann es sich beispielsweise um ein Intranet oder das Internet handeln. Das Antragsverwaltungsgerät 120 umfasst eine Speicher 122. In diesem Speicher 122 werden ein oder mehrere Versionen ein oder mehrerer Anträge 124 gespeichert, über welche im Zuge der virtuellen Konferenz abzustimmen ist. Das Ergebnis 126 der Abstimmung wird beispielsweise ebenfalls in dem Speicher 122 des Abstimmungsverwaltungsgerät 100 gespeichert. Das Ergebnis 124 umfasst beispielsweise neben den von dem Abstimmungsverwaltungsgerät 100 empfangenen Stimmen der Stimmberechtigten Teilnehmer der virtuellen Konferenz das Ergebnis einer Auszählung der entsprechenden Stimmen durch das Antragsverwaltungsgerät 120. Ferner ist in dem Speicher 122 beispielsweise eine Aufstellung 128 aller stimmberechtigter Teilnehmer der virtuellen Konferenz gespeichert. Die Aufstellung 128 umfasst beispielsweise für jeden der stimmberechtigten Teilnehmer jeweils einen Identifikator zum Identifizieren eines dem entsprechenden stimmberechtigten Teilnehmer zugeordneten Nutzerkontos 108, welches das Abstimmungsverwaltungsgerät 100 verwaltet. Ferner umfasst die Aufstellung 128 für alle stimmberechtigten Teilnehmer der virtuellen Konferenz jeweils einen öffentlichen kryptographischen Schlüssel, welcher als Signaturprüfschlüssel zum Prüfen von Signatur verwendet werden kann, welche mit dem von dem Abstimmungsverwaltungsgerät 100 verwalteten privaten kryptographischen Schlüssel 106 des entsprechenden Teilnehmers erstellt wurden. Ferner umfasst das Antragsverwaltungsgerät 120 einen Prozessor 130. Ein Ausführen von Programminstruktionen 132 durch den Prozessor 130 veranlasst das Antragsverwaltungsgerät 120 eine Abstimmung über eine aktuelle Version des Antrags 124 zu initiieren. Beispielsweise erstellt das Antragsverwaltungsgerät 120 Abstimmungsanfragen für jeden der abstimmungsberechtigten Teilnehmer gemäß Aufstellung 128 und sendet diese an das Abstimmungsverwaltungsgerät 100. Die Abstimmungsanfragen umfassen beispielsweise jeweils den Identifikator des abstimmungsberechtigten Teilnehmers gemäß Aufstellung 128, welchem sie zugeordnet sind, sowie einen Datensatz der aktuellen Version des Antrags 124, über welche abzustimmen ist. Ferner empfängt das Antragsverwaltungsgerät 120 in Antwort auf die Abstimmungsanfragen von dem Abstimmungsverwaltungsgerät 100 die Stimmen der stimmberechtigten Teilnehmer der virtuellen Konferenz in Form von signierten Kombinationen. Diese Kombinationen sind jeweils unter Verwendung des privaten kryptographischen Schlüssels 108 des entsprechenden stimmberechtigten Teilnehmers signiert.

Umfasst werden von den Kombinationen jeweils der Datensatz der aktuellen Version des Antrags, über welche abzustimmen ist, ein Identifikator eines abstimmungsberechtigten Teilnehmers und eine Abstimmungserklärung eines Nutzers eines Telekommunikationsendgeräts 140, 160, welches in dem Nutzerkonto 108 des von dem Identifikator identifizierten abstimmungsberechtigten Teilnehmers registriert ist. Registriert heißt beispielsweise, dass Verbindungsinformationen, wie etwa eine Mobilfunknummer des Telekommunikationsendgeräts 140, 160 in dem entsprechenden Nutzerkonto 108 auf dem Abstimmungsverwaltungsgerät 100 hinterlegt sind. Das Antragsverwaltungsgerät 120 prüft die Signaturen der Kombinationen unter Verwendung der öffentlichen kryptographischen Schlüssel der abstimmungsberechtigten Teilnehmer gemäß Aufstellung 128. Alternativer Weise können die öffentlichen kryptographischen Schlüssel auch jeweils mittels eines Zertifikats bereitgestellt werden, beispielsweise eines PKI-Zertifikats, welches von dem Abstimmungsverwaltungsgerät 100 zusammen mit der entsprechenden signierten Kombination an das Antragsverwaltungsgerät 120 gesendet wird. Auf eine erfolgreiche Signaturprüfung hin, wird die jeweilige Kombination beispielsweise als Teil des Abstimmungsergebnisses 126 zusammen mit der aktuellen Version des Antrags 124 in dem Speicher 122 des Antragsverwaltungsgeräts 120 gespeichert. Das Antragsverwaltungsgeräts 120 zählt die Stimmen unter Verwendung der von den signierten Kombinationen umfassten Abstimmungserklärungen der stimmberechtigten Teilnehmer der virtuellen Konferenz aus und Speichert das Ergebnis der Auszählung als Teil des Abstimmungsergebnisses 126 zusammen mit der aktuellen Version des Antrags 124 in dem Speicher 122 des Antragsverwaltungsgeräts 120.

Das Abstimmungsverwaltungsgerät 100 umfasst einen Speicher 102. In einem geschützten Speicherbereich 104 werden private kryptographische Schlüssel 106 der stimmberechtigten Teilnehmer der virtuellen Konferenz gespeichert. Beispielsweise wird der geschützte Speicherbereich 104 von einem Hochsicherheitsmodul (HSM) des Abstimmungsverwaltungsgeräts 100 bereitgestellt. Ferner sind in dem Speicher 102 beispielsweise eine Mehrzahl von Nutzerkonten 108 umfasst. Die Nutzerkonten 108 umfassen beispielsweise ein Nutzerkonto für jeden der stimmberechtigten Teilnehmer der virtuellen Konferenz. Die Nutzerkonten 108 sind den stimmberechtigten Teilnehmer der virtuellen Konferenz beispielsweise durch Identifikatoren der entsprechenden stimmberechtigten Teilnehmer, welch in den Nutzerkonten 108 gespeichert sind, zugeordnet. Ferner umfasst das Abstimmungsverwaltungsgerät 100 einen Prozessor 110, welcher dazu konfiguriert ist, Programminstruktionen 112 zum Ausführen eines Verfahrens zum Abstimmen über den Antrag 124 der virtuellen Konferenz. Ferner umfasst das Abstimmungsverwaltungsgerät 100 beispielsweise einen SMS-Generator 114 zum Erzeugen von Abstimmungsaufforderung in Form von SMS, welche jeweils einen individuellen Code umfassen, den das Abstimmungsverwaltungsgerät 100 unter Verwendung des Code-Generators 116 erzeugt. Bei den individuellen Codes, welche unter Verwendung des Code-Generators 116 erzeugt werden, handelt es sich beispielsweise um Zufallswerte oder Pseudo-Zufallswerte. Die mit dem SMS-Generator 114 erzeugten SMS werden beispielsweise unter Verwendung der Mobilfunkschnittstelle 119 über ein Mobilfunknetz 182 an Telekommunikationsendgeräte 140, 160 gesendet. Die hierzu notwendigen Verbindungsinformationen sind beispielsweise in den Nutzerkonten 108 der stimmberechtigten Teilnehmer der virtuellen Konferenz auf dem Abstimmungsverwaltungsgerät 100 gespeichert. Ferner umfasst das Abstimmungsverwaltungsgerät 100 beispielsweise eine Kommunikationsschnittstelle 118 zur Kommunikation mit den Telekommunikationsendgeräten 140, 160 über das Netzwerk 180. Beispielsweise stellt das Abstimmungsverwaltungsgerät 100 den Telekommunikationsendgeräten 140, 160 über das Netzwerk 180 einen Datensatz der aktuellen Version des Antrags zum herunterladen bereit. Der Datensatz umfasst beispielsweise einen Identifikator der aktuellen Version des Antrags 124 und/oder eine Kopie der aktuellen Version des Antrags 124. Zusätzlich oder alternativ sendet das Abstimmungsverwaltungsgerät 100 den Identifikator der aktuellen Version des Antrags 124 als Teil der Abstimmungsaufforderung in Form einer SMS über das Mobilfunknetz 182 an die Telekommunikationsendgeräte 140, 160.

Das Abstimmungsverwaltungsgerät 100 empfängt Abstimmungsantworten auf die gesendeten Abstimmungsaufforderungen von dem Telekommunikationsendgeräten 140, 150 über zweite Kommunikationskanäle. Bei den zweiten Kommunikationskanälen handelt es sich beispielsweise um verschlüsselte Netzwerkverbindungen zwischen dem Abstimmungsverwaltungsgerät 100 und den Telekommunikationsendgeräten 140, 150 über das Netzwerk 180. Die Abstimmungsantworten umfassen jeweils den gesendeten individuellen Code der Abstimmungsaufforderung, eine Authentifizierungsinformation des Nutzers des jeweiligen Telekommunikationsendgeräts 140, 150 sowie eine Abstimmungserklärung des Nutzers des jeweiligen Telekommunikationsendgeräts 140, 150. Das Abstimmungsverwaltungsgerät 100 prüft die Validität der empfangenen Codes und der empfangenen Authentifizierungsinformationen. Das Prüfen der Validität umfasst beispielsweise einen Vergleich der empfangenen Codes auf Übereinstimmung mit den gesendeten individuellen Codes sowie einen Vergleich der empfangenen Authentifizierungsinformationen auf Übereinstimmung mit Authentifizierungsinformationen, welche in den Nutzerkonten 108 der abstimmungsberechtigten Teilnehmer der virtuellen Konferenz hinterlegt sind. Auf eine erfolgreiche Prüfung hin, signiert das Abstimmungsverwaltungsgerät 100 für jede der empfangenen Abstimmungsantwort jeweils eine Kombination unter Verwendung des privaten kryptographischen Schlüssels 106 des jeweiligen stimmberechtigten Teilnehmers der virtuellen Konferenz. Die signierten Kombinationen umfassen jeweils den Datensatz der aktuellen Version des Antrags, über welche abzustimmen ist, den Identifikator des stimmberechtigten Teilnehmers und die Abstimmungserklärung des Nutzers des Telekommunikationsendgeräts 140, 150, welches dem entsprechenden stimmberechtigten Teilnehmer zugeordnet ist. Das Abstimmungsverwaltungsgerät 100 sendet die signierten Kombinationen an das Antragsverwaltungsgerät 120, beispielsweise über das Netzwerk 180.

Die Telekommunikationsendgeräten 140, 160 sind jeweils einem der stimmberechtigten Teilnehmer der virtuellen Konferenz zugeordnet und umfassen einen Speicher 142, 162, einen Prozessor 144, 164, eine Anzeigevorrichtung 148, 168, etwa in Form eines Displays und/oder Touchdisplays und eine Eingabevorrichtung 150, 170, etwa in Form einer Tastatur, eines Touchdisplays und/oder eines biometrischen Sensors. Ferner umfassen die Telekommunikationsendgeräten 140, 160 jeweils eine Kommunikationsschnittstelle 158, 178 zur Kommunikation über das Netzwerk 180 sowie ein Mobilfunkschnittstelle 159, 179 zur Kommunikation über das Mobilfunknetz 182. Die Prozessor 144, 164 der Telekommunikationsendgeräte 140, 160 sind jeweils dazu konfiguriert Programminstruktionen 146, 166 auszuführen, wodurch die Telekommunikationsendgeräte 140, 160 zum Ausführen eines Abstimmungsverfahrens veranlasst werden. Die Telekommunikationsendgeräte 140, 160 empfangen jeweils über den ersten Kommunikationskanal eine Abstimmungsaufforderung von dem Abstimmungsverwaltungsgerät 100, welche einen für den abstimmungsberechtigten Teilnehmer, welchem das Telekommunikationsendgerät 140, 160 zugeordnet ist, erzeugten individuellen Code umfasst. Zumindest ein Teil der Abstimmungsaufforderung, insbesondere der individuelle Code wird auf der Anzeigevorrichtung 148, 168 angezeigt. Ferner empfangen die Telekommunikationsendgeräte 140, 160 jeweils eine Nutzereingabe unter Verwendung einer Eingabevorrichtung 150, 160. Die Nutzereingaben umfassen jeweils eine Authentifizierungsinformation und eine Abstimmungserklärung des Nutzers des Telekommunikationsendgeräts. Zudem kann es erforderlich sein den individuellen Code einzugeben, was beispielsweise mittel Copy-and-paste erfolgen kann. Die Telekommunikationsendgeräte 140, 160 erstellen jeweils eine Abstimmungsantwort auf die empfangene Abstimmungsaufforderung, welche den empfangenen individuellen Code der Abstimmungsaufforderung, die empfangene Authentifizierungsinformation und die empfangene Abstimmungserklärung umfasst. Die Abstimmungsantworten werden jeweils über das Netzwerk 180 an das Abstimmungsverwaltungsgerät 100 gesendet.

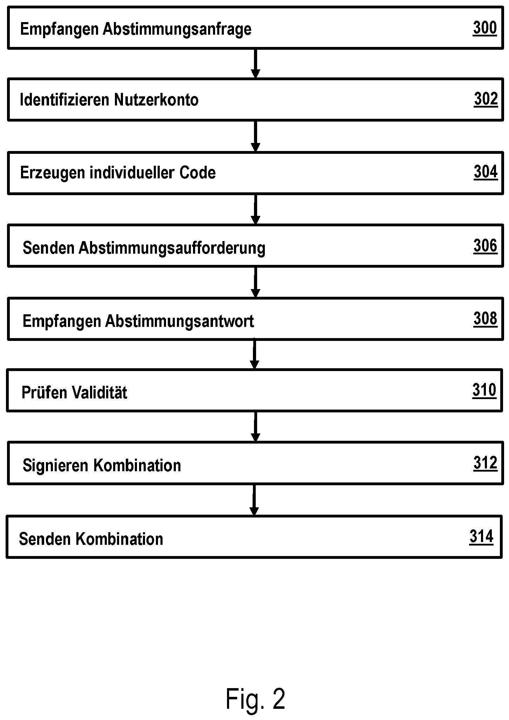

Figur 2 zeigt ein Verfahren zum kryptographisch gesicherten Abstimmen über einen Antrag unter Verwendung eines Abstimmungssystem für eine virtuelle Konferenz sowie eine Mehrzahl von Telekommunikationsendgeräten. Das Abstimmungssystem umfasst ein zentrales Antragsverwaltungsgerät und ein zentrales Abstimmungsverwaltungsgerät. Jedes der Telekommunikationsendgeräte ist jeweils einem stimmberechtigten Teilnehmer der virtuellen Konferenz zugeordnet. In Block 300, empfängt das Abstimmungsverwaltungsgerät eine Mehrzahl von Abstimmungsanfragen von dem Antragsverwaltungsgerät. Die Mehrzahl von Abstimmungsanfragen umfasst eine Abstimmungsanfrage für jeden der stimmberechtigten Teilnehmer der virtuellen Konferenz. Die Abstimmungsanfragen umfassen jeweils einen Identifikator des stimmberechtigten Teilnehmers, welchem sie zugeordnet sind. Anhand dieser Identifikatoren kann für die einzelnen stimmberechtigten Teilnehmer jeweils ein von dem Abstimmungsverwaltungsgerät verwaltetes Nutzerkonto identifiziert werden. Die Identifikatoren können beispielsweise jeweils einen Klarnamen des entsprechenden stimmberechtigten Teilnehmers umfassen. Somit können beispielsweise namentliche Abstimmungen ermöglicht werden. Bei den entsprechenden Identifikatoren kann es sich beispielsweise auch um Pseudonyme der stimmberechtigten Teilnehmer handeln, welche eine anonyme Abstimmung ermöglichen Ferner umfassen die Abstimmungsanfragen beispielsweise jeweils einen Datensatz einer aktuellen Version des Antrags, über welche abzustimmen ist. Der entsprechende Datensatz erlaubt es beispielsweise die aktuelle Version des Antrags, über die abgestimmt wird zu identifizieren. Hierzu umfasst der Datensatz beispielsweise jeweils einen Identifikator der aktuellen Version des Antrags und/oder eine Kopie der aktuellen Version des Antrags.

Das Abstimmungsverwaltungsgerät auf den Empfang der Abstimmungsanfragen beispielsweise für jede der empfangenen Abstimmungsanfragen die Blöcke 302 bis 314 aus. In Block 302 wird ein von dem Abstimmungsverwaltungsgerät verwaltetes Nutzerkontos des stimmberechtigten Teilnehmers, welchem die Abstimmungsanfrage zugeordnet ist, identifiziert. Hierzu wird der Identifikator verwendet, welchen die jeweilige Abstimmungsanfrage umfasst. Mittels der Identifikatoren werden die Abstimmungsanfrage somit den Nutzerkonten zugeordnet. Jedes der Nutzerkonten umfasst beispielsweise einen dem entsprechenden stimmberechtigten Teilnehmer zugeordneten privaten kryptographischen Schlüssel. Die privaten kryptographischen Schlüssel sind beispielsweise in einem geschützten Speicherbereich des Abstimmungsverwaltungsgeräts gespeichert. Beispielsweise wird der geschützte Speicherbereich von einem Hochsicherheitsmodul (HSM) des Abstimmungsverwaltungsgeräts bereitgestellt. In Block 304, wird ein individueller Codes für den jeweiligen stimmberechtigten Teilnehmer, welchem die Abstimmungsanfrage zugeordnet ist, erstellt. Bei dem entsprechenden Code handelt es sich beispielsweise um einen Zufallswert oder einen Pseudo-Zufallswert. In Block 306, wird eine den erzeugten individuellen Codes umfassende Abstimmungsaufforderung über einen ersten Kommunikationskanal an das Telekommunikationsendgerät gesendet, welches dem stimmberechtigten Teilnehmer des identifizierten Nutzerkontos zugeordnet ist. Hierzu werden Verbindungsinformationen des entsprechenden Telekommunikationsendgeräts verwendet, welche in dem identifizierten Nutzerkonto des stimmberechtigten Teilnehmers hinterlegt sind. Beispielsweise wird die entsprechende Abstimmungsaufforderung mittels einer SMS an das Telekommunikationsendgerät gesendet, wobei die Verbindungsinformationen eine Mobilfunknummer des entsprechenden Telekommunikationsendgeräts umfassen.

In Block 308 wird eine Abstimmungsantwort auf die gesendete Abstimmungsaufforderung von dem Telekommunikationsendgerät über einen zweiten Kommunikationskanal empfangen. Beispielsweise baut das Abstimmungsverwaltungsgerät den zweiten Kommunikationskanal zu dem Telekommunikationsendgerät vor, parallel oder nach dem Senden der Abstimmungsaufforderung auf. Beispielsweise baut das Telekommunikationsendgerät den zweiten Kommunikationskanal auf den Empfang der Abstimmungsaufforderung hin auf. Beispielsweise handelt es sich bei dem zweiten Kommunikationskanal um einen verschlüsselten Kommunikationskanal, etwa um eine verschlüsselte Internetverbindung. Beispielsweise handelt es sich bei dem zweiten Kommunikationskanal um eine HTTPS-Session. Die empfangene Abstimmungsantwort umfasst den gesendeten individuellen Code der Abstimmungsaufforderung, eine Authentifizierungsinformation des Nutzers des Telekommunikationsendgeräts sowie eine Abstimmungserklärung des Nutzers des Telekommunikationsendgeräts. Die Authentifizierungsinformation kann beispielsweise eine PIN oder ein Passwort sein. Beispielsweise kann die Authentifizierungsinformation ein biometrisches Merkmal, wie etwa ein Fingerabdruck oder Gesichtsscan des Nutzers des Telekommunikationsendgeräts sein. Abstimmungserklärung des Nutzers gibt beispielsweise an, ob dieser dem Antrag zustimmt, den Antrag ablehnt oder sich der Stimme enthält. In Block 310 prüft das Abstimmungsverwaltungsgerät die Validität des empfangenen Codes und der empfangenen Authentifizierungsinformation. Hierzu vergleicht das Abstimmungsverwaltungsgerät den empfangenen Code auf eine Übereinstimmung mit dem zuvor in Block 306 gesendeten individuellen Code. Ferner vergleicht das Abstimmungsverwaltungsgerät die empfangene Authentifizierungsinformation auf eine Übereinstimmung mit einer von dem Nutzerkonto umfassten Authentifizierungsinformation des stimmberechtigten Teilnehmers, welche als Referenz dient. Beispielsweise wird die Authentifizierungsinformation in gehashter Form übertragen und ist in gehashter Form in dem Nutzerkonto hinterlegt.

In Block 312 wird auf eine erfolgreiche Prüfung hin von dem Abstimmungsverwaltungsgerät eine Kombination unter Verwendung des von dem Abstimmungsverwaltungsgerät umfassten privaten kryptographischen Schlüssel des stimmberechtigten Teilnehmers signiert. Die Kombination umfasst den Datensatz der aktuellen Version des Antrags, über welche abzustimmen ist, den Identifikator des stimmberechtigten Teilnehmers und die Abstimmungserklärung des Nutzers des Telekommunikationsendgeräts. Mittels der Signatur wird somit eine kryptographisch gesicherte Verknüpfung zwischen der aktuellen Version des Antrags, dem stimmberechtigten Teilnehmer und der Abstimmungserklärung des stimmberechtigten Teilnehmers, bzw. seiner Entscheidung hinsichtlich des Antrags, hergestellt. In Block 314 sendet das Abstimmungsverwaltungsgerät die signierte Kombination an das Antragsverwaltungsgerät, damit diese die Signatur der Kombination unter Verwendung eines öffentlichen kryptographischen Schlüssels des stimmberechtigten Teilnehmers prüfen kann und die Kombination als Stimme des entsprechenden stimmberechtigten Teilnehmers speichert. Ferner kann das Antragsverwaltungsgerät die von der signierten Kombination umfasste Abstimmungserklärung zum Auszählen des Abstimmungsergebnisses verwenden.

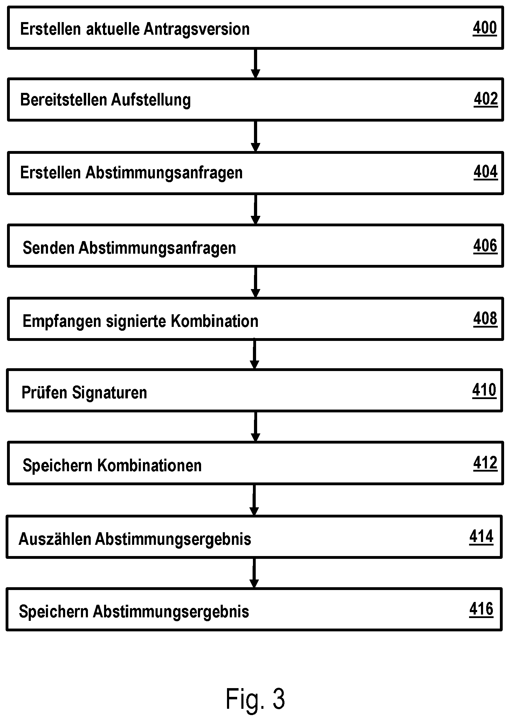

Figur 3 zeigt ein von einem Antragsverwaltungsgerät ausgeführtes Verfahren im Zuge eins kryptographisch gesicherten Abstimmens über einen Antrag für eine virtuelle Konferenz. In Block 400 erstellt das Antragsverwaltungsgerät aktuellen Version des Antrags. Beispielsweise werden Änderungen an einem bestehenden Entwurf für einen Antrag der resultierende geänderte Antrag als aktuelle Version des Antrags zur Abstimmung gestellt. Hierzu wird in Block 402 von dem Antragsverwaltungsgerät eine Aufstellung aller stimmberechtigten Teilnehmer der virtuellen Konferenz bereitgestellt. Die Aufstellung umfasst für jeden der stimmberechtigten Teilnehmer jeweils einen Identifikator, anhand dessen ein dem entsprechenden stimmberechtigten Teilnehmer zugeordnetes Nutzerkonto auf dem Antragsverwaltungsgerät identifiziert werden kann. Ferner umfass die Ausstellung beispielsweise für jeden der stimmberechtigten Teilnehmer jeweils einen öffentlichen kryptographischen Schlüssel, mit dem Signaturen der entsprechenden stimmberechtigten Teilnehmer geprüft werden können. In Block 404 erstellt das Antragsverwaltungsgerät eine Mehrzahl von Abstimmungsanfragen, welche eine Abstimmungsanfrage für jeden der stimmberechtigten Teilnehmer gemäß der Aufstellung umfasst. Die Abstimmungsanfragen umfassen jeweils den Identifikator des stimmberechtigten Teilnehmers, welchem sie zugeordnet sind, gemäß Aufstellung. Ferner umfassen die Abstimmungsanfragen jeweils einen Datensatz der aktuellen Version des Antrags, über welche abzustimmen ist. Der entsprechende Datensatz erlaubt es beispielsweise die aktuelle Version des Antrags, über die abgestimmt wird zu identifizieren. Hierzu umfasst der Datensatz beispielsweise jeweils einen Identifikator der aktuellen Version des Antrags und/oder eine Kopie der aktuellen Version des Antrags. In Block 406 sendet das Antragsverwaltungsgerät die in Block 404 erstellten Abstimmungsanfragen an ein Abstimmungsverwaltungsgerät. Beispielsweise wird hierzu von dem Antragsverwaltungsgerät ein verschlüsselter Kommunikationskanal zu dem Abstimmungsverwaltungsgerät aufgebaut.

In Block 408 empfängt das Antragsverwaltungsgerät in Antwort auf die Mehrzahl von Abstimmungsanfragen von dem Abstimmungsverwaltungsgerät eine Mehrzahl von signierten Kombinationen. Beispielsweise empfängt das Antragsverwaltungsgerät die Kombinationen über einen verschlüsselten Kommunikationskanal. Beispielsweise empfängt das Antragsverwaltungsgerät die Kombinationen auf einmal oder sukzessive. Die empfangenen Kombinationen umfassen jeweils den Datensatz der aktuellen Version des Antrags, über welche abzustimmen ist, einen Identifikator eines stimmberechtigten Teilnehmers und eine Abstimmungserklärung eines Nutzers eines Telekommunikationsendgeräts, welches in einem Nutzerkonto des von dem Identifikator identifizierten stimmberechtigten Teilnehmers registriert ist. In Block 410 prüft das Antragsverwaltungsgerät die Signaturen der Kombinationen unter Verwendung der öffentlichen kryptographischen Schlüssel der stimmberechtigten Teilnehmer, welche beispielsweise die Aufstellung bereitstellt. In Block 412 speichert das Antragsverwaltungsgerät jeweils auf eine erfolgreiche Signaturprüfung hin die jeweilige Kombination zusammen mit der aktuellen Version des Antrags. In Block 414 zählt das Antragsverwaltungsgerät das Abstimmungsergebnis unter Verwendung der von den signierten Kombinationen umfassten Abstimmungserklärungen aus. In Block 416 wird das Resultat der Auszählung, beispielsweise zusammen mit den signierten Kombinationen, von dem Antragsverwaltungsgerät als Abstimmungsergebnisses zusammen mit der aktuellen Version des Antrags, über den abgestimmt wurde, gespeichert.

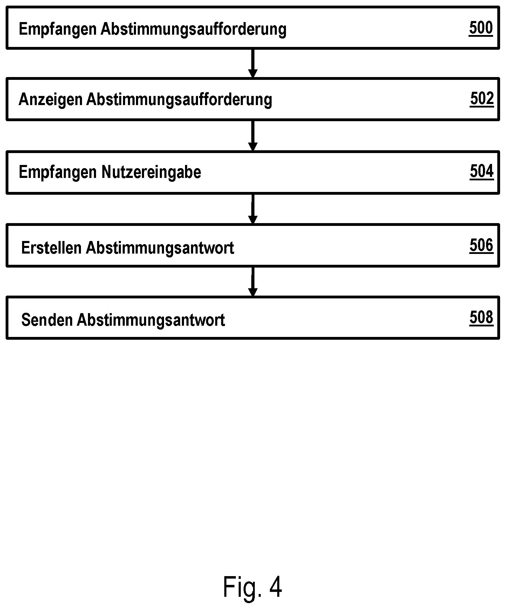

Figur 4 zeigt ein von einer Mehrzahl von Telekommunikationsendgeräten ausgeführtes Verfahren im Zuge eins kryptographisch gesicherten Abstimmens über einen Antrag für eine virtuelle Konferenz. Die Telekommunikationsendgeräte sind jeweils einem der stimmberechtigten Teilnehmer der virtuellen Konferenz zugeordnet. Beispielsweise sind Verbindungsinformationen, wie etwa eine Mobilfunknummern der Telekommunikationsendgeräte, in Nutzerkonten der stimmberechtigten Teilnehmer der virtuellen Konferenz hinterlegt. Die entsprechenden Nutzerkonten werden beispielsweise von einem Abstimmungsverwaltungsgerät verwaltet. Beispielsweise führt im Zuge der Abstimmung jedes der Telekommunikationsendgeräten die folgenden Blöcke 500 bis 508 aus. In Block 500 empfängt das Telekommunikationsendgerät eine Abstimmungsaufforderung von dem Abstimmungsverwaltungsgerät. Die Abstimmungsaufforderung umfasst einen für den stimmberechtigten Teilnehmer, welchem das Telekommunikationsendgerät zugeordnet ist, erzeugten individuellen Code über einen ersten Kommunikationskanal. Beispielsweise wird die entsprechende Abstimmungsaufforderung mittels einer SMS über ein Mobilfunknetz empfangen. Hierzu sind beispielsweise Verbindungsinformationen in Form einer Mobilfunknummer des entsprechenden Telekommunikationsendgeräts in einem Nutzerkonto des stimmberechtigten Teilnehmers, welchem das Telekommunikationsendgerät zugeordnet ist, in dem Abstimmungsverwaltungsgerät hinterlegt. In Block 500 wird die empfangenen Abstimmungsaufforderung vollständig oder zumindest teilweise unter Verwendung einer Anzeigevorrichtung des Telekommunikationsendgeräts angezeigt. Beispielsweise wird der individuelle Code angezeigt. Beispielsweise umfasst die Abstimmungsaufforderung ferner einen Identifikator der Version des Antrags, über welche abzustimmen ist. Der entsprechende Identifikator wird beispielsweise ebenfalls angezeigt. Beispielsweise umfasst die Abstimmungsaufforderung ferner eine Kopie der aktuellen Version des Antrags, über welche abzustimmen ist, oder das Telekommunikationsendgerät kann sich die Kopie des Antrags von dem Abstimmungsverwaltungsgerät über einen zweiten Kommunikationskanal herunterleiten. Die entsprechende Kopie der aktuellen Version des Antrags wird beispielsweise ebenfalls angezeigt. In Block 504 empfängt das Telekommunikationsendgerät Empfangen einer Nutzereingabe unter Verwendung einer Eingabevorrichtung des Telekommunikationsendgeräts.

Die Nutzereingabe umfasst beispielsweise eine Authentifizierungsinformation und eine Abstimmungserklärung des Nutzers des Telekommunikationsendgeräts. Die Authentifizierungsinformation kann beispielsweise eine PIN oder ein Passwort sein. Beispielsweise kann die Authentifizierungsinformation ein biometrisches Merkmal, wie etwa ein Fingerabdruck oder Gesichtsscan des Nutzers des Telekommunikationsendgeräts sein. Abstimmungserklärung des Nutzers gibt beispielsweise an, ob dieser dem Antrag zustimmt, den Antrag ablehnt oder sich der Stimme enthält. Bei der Eingabevorrichtung kann es sich beispielsweise um eine Tastatur, ein Touchdisplay und/oder einen biometriechen Sensor handeln. In Block 506 erstellt das Telekommunikationsendgerät eine Abstimmungsantwort auf die empfangene Abstimmungsaufforderung. Diese Abstimmungsantwort umfasst den mit der Abstimmungsaufforderung in Block 500 empfangenen den empfangenen individuellen Code der Abstimmungsaufforderung, die empfangene Authentifizierungsinformation und die empfangene Abstimmungserklärung umfasst. In Block 508 wird die Abstimmungsantwort über einen zweiten Kommunikationskanal in Antwort auf die in Block 500 empfangene Abstimmungsaufforderung an das Abstimmungsverwaltungsgerät gesendet. Bei dem ersten Kommunikationskanal handelt es sich um einen zu dem zweiten Kommunikationskanal separaten und/oder separat gesicherten Seitenkanal.

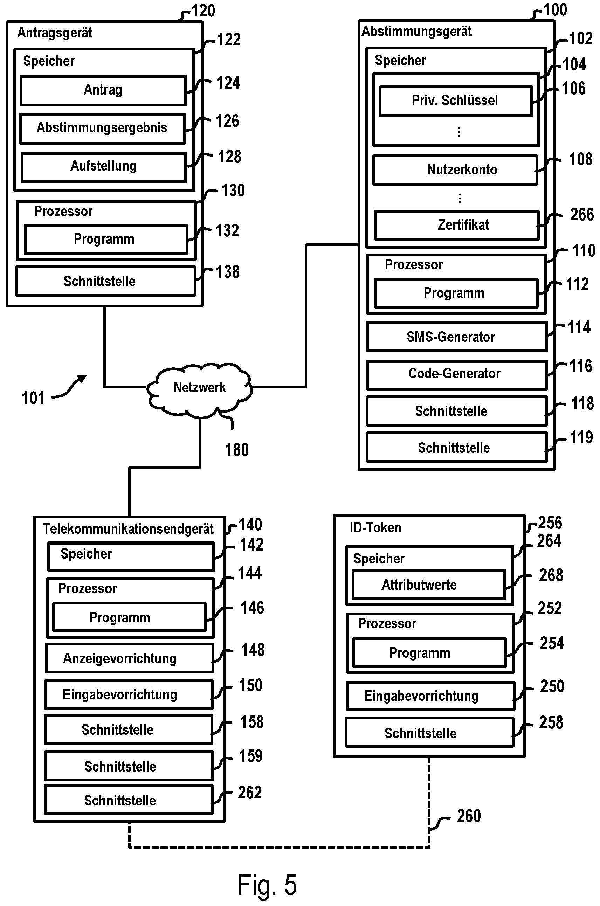

Figur 5 zeigt ein exemplarischen Abstimmungssystems 101 mit einem Abstimmungsverwaltungsgerät 100 und einem Antragsverwaltungsgerät 120. Das Abstimmungsverwaltungsgerät 100 ist dazu konfiguriert, Registrierungsdaten stimmberechtigter Teilnehmer der virtuellen Konferenz, welchen beispielsweise jeweils ein Telekommunikationsendgerät 140 zugeordnet ist, in Nutzerkonten 108 zu speichern, die von dem Abstimmungsverwaltungsgerät 100 verwaltet werden. Zu den Registrierungsdaten gehören neben Mobilfunktelefonnummern der jeweiligen Telekommunikationsendgerät 140 beispielsweise auch Attribute mit den dazugehörigen Attributwerten des jeweiligen stimmberechtigten Teilnehmers. Eine initiale Registrierung eines stimmberechtigten Teilnehmers der virtuellen Konferenz erfolgt dabei beispielsweise mithilfe eines ID-Tokens 256 des stimmberechtigten Teilnehmers, wie zum Beispiel einem elektronischen Ausweisdokument des stimmberechtigten Teilnehmers, insbesondere einem elektronischen Personalausweis der Bundesrepublik Deutschland.

Der ID-Token 256 des stimmberechtigten Teilnehmers der virtuellen Konferenz umfasst einen Prozessor 252, welcher dazu konfiguriert ist Programminstruktionen 254 auszuführen. Ein Ausführen der Programminstruktionen 254 veranlasst den Prozessor 252 beispielsweise dazu Attributwerte 268 desstimmberechtigten Teilnehmers für dessen initiale Registrierung bei dem Abstimmungsverwaltungsgerät 100 bereitzustellen. Ferner umfasst der ID-Token 256 eine Kommunikationsschnittstelle 258 zum Aufbau einer lokalen Verbindung 260 zu einer entsprechenden Kommunikationsschnittstelle 262 des Telekommunikationsendgeräts 140. Die Kommunikationsschnittstellen 258 und 262 können beispielsweise als RFID- oder NFC-Schnittstellen ausgebildet sein. Der ID-Token 256 umfasst ferner einen elektronischen Speicher 264, in welchem Attributwerte 268 von Attributen des stimmberechtigten Teilnehmers, wie zum Beispiel Name und Adresse des stimmberechtigten Teilnehmers der virtuellen Konferenz, gespeichert sind. Für die initiale Registrierung des stimmberechtigten Teilnehmers durch das Abstimmungsverwaltungsgerät 100 wird beispielsweise wie folgt vorgegangen:
Der stimmberechtigte Teilnehmer bringt den ihm zugeordneten ID-Token 256 in einen Nahbereich der Kommunikationsschnittstelle 262 des Telekommunikationsendgeräts 140, sodass die lokale Verbindung 260 zwischen ID-Token 256 und Telekommunikationsendgerät 140 aufgebaut werden kann. Der stimmberechtigte Teilnehmer authentifiziert sich gegenüber dem ID-Token 256 durch Eingabe von Authentifizierungsdaten bzw. Authentifizierungsinformationen, zum Beispiel in das Telekommunikationsendgerät 140 unter Verwendung der Eingabevorrichtung 150 oder unmittelbar in den ID-Token 256, falls dieser beispielsweise ebenfalls über eine Eingabevorrichtung 250, wie etwa eine Tastatur oder einen biometrischen Sensor, verfügt. Ferner authentifiziert sich auch das Abstimmungsverwaltungsgerät 100 gegenüber dem ID-Token 256, beispielsweise indem das Abstimmungsverwaltungsgerät 100 ein Zertifikat 266, welches insbesondere als sogenanntes Berechtigungszertifikat ausgebildet sein kann, über das Netzwerk 280, das Telekommunikationsendgerät 140 und die lokale Verbindung 260 an den ID-Token 256 überträgt. Dieses Zertifikat 266 dient zum Nachweis der Authentizität des Abstimmungsverwaltungsgeräts 100 sowie zum Nachweis von dessen Leseberechtigung der in dem Speicher 264 gespeicherten Attributwerte 268 des stimmberechtigten Teilnehmers. Das Zertifikat 266 kann nach einem Public Key Infrastruktur (PKI) Standard erstellt worden sein, beispielsweise nach dem X.509 Standard.

Nachdem diese beiden Authentifizierungen erfolgreich durchgeführt wurden, wird eine verschlüsselte Verbindung, beispielsweise mit Ende-zu-Ende-Verschlüsselung, zwischen dem Abstimmungsverwaltungsgerät 100 und dem ID-Token 256 aufgebaut, und zwar über das Netzwerk 180, das Telekommunikationsendgerät 140 und die lokale Verbindung 260. Dies erfolgt beispielsweise auf einer Anwendungsschicht.

Das Abstimmungsverwaltungsgerät 100 sendet dann ein Lesekommando, das zum Beispiel als Chipkarten-Kommando ausgebildet sein kann, wie zum Beispiel eine sogenannte APDU, zum Lesen von Attributwerten aus dem Speicher 264 über die verschlüsselte Verbindung an den ID-Token 256, der daraufhin die angeforderten Attributwerte über die verschlüsselte Verbindung an das Abstimmungsverwaltungsgerät 100 sendet. Das Abstimmungsverwaltungsgerät 100 speichert die ausgelesenen Attributwerte als Teil der Registrierungsdaten für den stimmberechtigten Teilnehmers der virtuellen Konferenz in dem Nutzerkonto 108.

### Bezugszeichenliste

- 100: Abstimmungsverwaltungsgerät
- 101: Abstimmungssystem
- 102: Speicher
- 104: geschützter Speicherbereich
- 106: privater kryptographischer Schlüssel
- 108: Nutzerkonto
- 110: Prozessor
- 112: Programm
- 114: SMS-Generator
- 116: Code-Generator
- 118: Kommunikationsschnittstelle
- 119: Kommunikationsschnittstelle
- 120: Antragsverwaltungsgerät
- 122: Speicher
- 124: Antrag
- 126: Abstimmungsergebnis
- 128: Aufstellung
- 130: Prozessor
- 132: Programm
- 138: Kommunikationsschnittstelle
- 140: Telekommunikationsendgerät
- 142: Speicher
- 144: Prozessor
- 146: Programm
- 148: Anzeigevorrichtung
- 150: Eingabevorrichtung
- 158: Kommunikationsschnittstelle
- 159: Kommunikationsschnittstelle
- 160: Telekommunikationsendgerät
- 162: Speicher
- 164: Prozessor
- 166: Programm
- 168: Anzeigevorrichtung
- 170: Eingabevorrichtung
- 178: Kommunikationsschnittstelle
- 179: Kommunikationsschnittstelle
- 180: Netzwerk
- 182: Mobilfunknetz
- 250: Eingabevorrichtung
- 252: Prozessor
- 254: Programminstruktionen
- 256: ID-Token
- 258: Kommunikationsschnittstelle
- 260: Verbindung
- 262: Kommunikationsschnittstelle
- 264: Speicher
- 266: Zertifikat
- 268: Attributwerte

## Patentansprüche

1. Verfahren zum kryptographisch gesicherten Abstimmen über einen Antrag (124) unter Verwendung eines Abstimmungssystem (101) für eine virtuelle Konferenz sowie eine Mehrzahl von Telekommunikationsendgeräten (140, 160), wobei das Abstimmungssystem (101) ein zentrales Antragsverwaltungsgerät (120) und ein zentrales Abstimmungsverwaltungsgerät (100) umfasst, wobei jedes der Telekommunikationsendgeräte (140, 160) jeweils einem stimmberechtigten Teilnehmer der virtuellen Konferenz zugeordnet ist,
wobei das Verfahren durch das Abstimmungsverwaltungsgerät (100) umfasst:
• Empfangen einer Mehrzahl von Abstimmungsanfragen von dem Antragsverwaltungsgerät (120), wobei die Mehrzahl von Abstimmungsanfragen eine Abstimmungsanfrage für jeden der stimmberechtigten Teilnehmer umfasst, wobei die Abstimmungsanfragen der Mehrzahl von Abstimmungsanfragen jeweils einen Identifikator des stimmberechtigten Teilnehmers umfassen, welchem sie zugeordnet sind, sowie einen Datensatz einer aktuellen Version des Antrags (124), über welche abzustimmen ist,
wobei das Verfahren für jede der empfangenen Abstimmungsanfragen durch das Abstimmungsverwaltungsgerät (100) ferner umfasst:
• Identifizieren eines von dem Abstimmungsverwaltungsgerät (100) verwalteten Nutzerkontos (108) des stimmberechtigten Teilnehmers, welchem die Abstimmungsanfrage zugeordnet ist, unter Verwendung des von der Abstimmungsanfrage umfassten Identifikators, wobei das Nutzerkonto (108) einen dem stimmberechtigten Teilnehmer zugeordneten privaten kryptographischen Schlüssel (106) umfasst,
• Erzeugen eines individuellen Codes für den stimmberechtigten Teilnehmer, welchem die Abstimmungsanfrage zugeordnet ist,
• Senden einer den erzeugten individuellen Codes umfassenden Abstimmungsaufforderung über einen ersten Kommunikationskanal an das Telekommunikationsendgerät (140, 160), welches dem stimmberechtigten Teilnehmer des identifizierten Nutzerkontos (108) zugeordnet ist, unter Verwendung von Verbindungsinformationen des Telekommunikationsendgeräts (140, 160), welche das identifizierte Nutzerkonto (108) umfasst,
• Empfangen einer Abstimmungsantwort auf die gesendete Abstimmungsaufforderung von dem Telekommunikationsendgerät (140, 160) über einen zweiten Kommunikationskanal, wobei die Abstimmungsantwort den gesendeten individuellen Code der Abstimmungsaufforderung, eine Authentifizierungsinformation des Nutzers des Telekommunikationsendgeräts (140, 160) sowie eine Abstimmungserklärung des Nutzers des Telekommunikationsendgeräts (140, 160) umfasst, wobei es sich bei dem ersten Kommunikationskanal um einen zu dem zweiten Kommunikationskanal separaten und/oder separat gesicherten Seitenkanal handelt,
• Prüfen der Validität des empfangenen Codes und der empfangenen Authentifizierungsinformation, wobei das Prüfen der Validität einen Vergleich des empfangenen Codes auf Übereinstimmung mit dem gesendeten individuellen Code umfasst und einen Vergleich der empfangenen Authentifizierungsinformation auf Übereinstimmung mit einer von dem Nutzerkonto (108) umfassten Authentifizierungsinformation des stimmberechtigten Teilnehmers umfasst,
• auf eine erfolgreiche Prüfung hin, Signieren einer Kombination, welche den Datensatz der aktuellen Version des Antrags (124), über welche abzustimmen ist, den Identifikator des stimmberechtigten Teilnehmers und die Abstimmungserklärung des Nutzers des Telekommunikationsendgeräts (140, 160) umfasst, unter Verwendung des privaten kryptographischen Schlüssels (106) des stimmberechtigten Teilnehmers,
• Senden der signierten Kombination an das Antragsverwaltungsgerät (120) zum Prüfen der Signatur der Kombination unter Verwendung eines öffentlichen kryptographischen Schlüssels des stimmberechtigten Teilnehmers, zum Speichern zusammen mit der aktuellen Version des Antrags (124) und zum Auszählen des Abstimmungsergebnisses unter Verwendung der von der signierten Kombination umfassten Abstimmungserklärungen.

2. Verfahren nach Anspruch 1, wobei die Abstimmungserklärung eine Angabe umfasst, ob der Nutzer des Telekommunikationsendgeräts (140, 160) der aktuellen Version des Antrags (124), über welche abzustimmen ist, zustimmt, die aktuelle Version ablehnt oder sich der Abstimmung enthält.

3. Verfahren nach einem der vorangehenden Ansprüche, wobei es sich bei dem Identifikator des stimmberechtigten Teilnehmers um ein Pseudonym des stimmberechtigten Teilnehmers handelt oder
wobei der Identifikator des stimmberechtigten Teilnehmers einen Klarnamen des stimmberechtigten Teilnehmers umfasst.

4. Verfahren nach einem der vorangehenden Ansprüche, wobei von dem Abstimmungsverwaltungsgerät (100) für die gesendeten Abstimmungsaufforderungen jeweils ein erstes Zeitintervall vorgegeben wird für den Empfang der zugehörigen Abstimmungsantwort,
wobei das Verfahren, falls auf eine der Abstimmungsaufforderungen keine Abstimmungsantwort innerhalb des vorgegeben ersten Zeitintervalls empfangen wird, durch das Abstimmungsverwaltungsgerät (100) ferner umfasst:
• Erstellen einer Abstimmungsfehlmeldung, welche den Datensatz der aktuellen Version des Antrags (124), über welche abzustimmen ist, und den Identifikator des entsprechenden stimmberechtigten Teilnehmers umfasst,
• Senden der Abstimmungsfehlmeldung an das Antragsverwaltungsgerät (120).

5. Verfahren nach Anspruch 4, wobei eine Abstimmungsfehlmeldung im Zuge der Auszählung des Abstimmungsergebnisses als eine Enthaltung gewertet wird.

6. Verfahren nach einem der Ansprüche 4 bis 5, wobei die Abstimmungsaufforderungen jeweils eine Zeitinformation über den Beginn des jeweiligen ersten Zeitintervalls umfasst, wobei die Telekommunikationsendgeräte (140, 160) die Zeitinformation jeweils zu Anzeigen eines Ablaufs des ersten Zeitintervalls zum Beantworten der Abstimmungsaufforderung verwenden, oder
wobei die Telekommunikationsendgeräte (140, 160) auf den Erhalt der Abstimmungsaufforderungen jeweils einen Ablauf eines vordefinierten zweiten Zeitintervalls zum Beantworten der Abstimmungsaufforderung anzeigen, welches kürzer als das erste Zeitintervall ist.

7. Verfahren nach einem der vorangehenden Ansprüche, wobei es sich bei den individuellen Codes jeweils um Zufallswerte oder Pseudo-Zufallswerte handelt.

8. Verfahren nach einem der vorangehenden Ansprüche, wobei es sich bei dem zweiten Kommunikationskanal um einen verschlüsselten Kommunikationskanal handelt und/oder
wobei es sich bei dem ersten Kommunikationskanal um einen Seitenkanal eines Mobilfunknetzes handelt, über welchen SMS-Nachricht gesendet werden, oder um einen Seitenkanal eines Mobilfunknetzes handelt, über welchen automatisch generierte Sprachnachrichten gesendet werden.

9. Verfahren nach einem der vorangehenden Ansprüche, wobei der Datensatz der aktuellen Version des Antrags (124) einen Identifikator der aktuellen Version des Antrags (124) umfasst und/oder
wobei die Abstimmungsaufforderungen jeweils den Identifikator der aktuellen Version des Antrags (124) umfassen zum Anzeigen auf einer Anzeigevorrichtung (148, 168) des die jeweilige Abstimmungsaufforderung empfangenden Telekommunikationsendgeräts (140, 160) und/oder
wobei der Datensatz der aktuellen Version des Antrags (124) einen Hashwert der aktuellen Version des Antrags (124) umfasst und/oder
wobei der Datensatz der aktuellen Version des Antrags (124) eine Kopie zumindest eines Teils der aktuellen Version des Antrags (124) umfasst und/oder
wobei die Abstimmungsaufforderungen jeweils die Kopie zumindest eines Teils der aktuellen Version des Antrags (124) umfassen zum Anzeigen auf einer Anzeigevorrichtung (148, 168) des die jeweilige Abstimmungsaufforderung empfangenden Telekommunikationsendgeräts (140, 160).

10. Verfahren nach einem der vorangehenden Ansprüche, wobei der Datensatz der aktuellen Version des Antrags (124) eine Signatur der aktuellen Version des Antrags (124) mit einem privaten kryptographischen Schlüssel des Antragsverwaltungsgeräts (120) als Signaturschlüssel umfasst.

11. Verfahren nach Anspruch 10, wobei eine Verarbeitung der Abstimmungsanfragen durch das Abstimmungsverwaltungsgerät (100) jeweils eine erfolgreiche Signaturprüfung der von dem Datensatz der aktuellen Version des Antrags (124) umfassten Signatur der aktuellen Version des Antrags (124) mit einem öffentlichen kryptographischen Schlüssel des Antragsverwaltungsgeräts (120) als Signaturprüfschlüssel voraussetzt.

12. Abstimmungsverwaltungsgerät (100) für eine virtuelle Konferenz zum kryptographisch gesicherten Abstimmen über einen Antrag (124), welches konfiguriert ist zum:
• Empfangen einer Mehrzahl von Abstimmungsanfragen von dem Antragsverwaltungsgerät (120), wobei die Mehrzahl von Abstimmungsanfragen eine Abstimmungsanfrage für jeden der stimmberechtigten Teilnehmer umfasst, wobei die Abstimmungsanfragen der Mehrzahl von Abstimmungsanfragen jeweils einen Identifikator des stimmberechtigten Teilnehmers umfassen, welchem sie zugeordnet sind, sowie einen Datensatz einer aktuellen Version des Antrags (124), über welche abzustimmen ist,
wobei das Abstimmungsverwaltungsgerät (100) ferner für jede der empfangenen Abstimmungsanfragen konfiguriert ist zum:
• Identifizieren eines von dem Abstimmungsverwaltungsgerät (100) verwalteten Nutzerkontos (108) des stimmberechtigten Teilnehmers, welchem die Abstimmungsanfrage zugeordnet ist, unter Verwendung des von der Abstimmungsanfrage umfassten Identifikators, wobei das Nutzerkonto (108) einen dem stimmberechtigten Teilnehmer zugeordneten privaten kryptographischen Schlüssel (106) umfasst,
• Erzeugen eines individuellen Codes für den stimmberechtigten Teilnehmer, welchem die Abstimmungsanfrage zugeordnet ist,
• Senden einer den erzeugten individuellen Codes umfassenden Abstimmungsaufforderung über einen ersten Kommunikationskanal an das Telekommunikationsendgerät (140, 160), welches dem stimmberechtigten Teilnehmer des identifizierten Nutzerkontos (108) zugeordnet ist, unter Verwendung von Verbindungsinformationen des Telekommunikationsendgeräts (140, 160), welche das identifizierte Nutzerkonto (108) umfasst,
• Empfangen einer Abstimmungsantwort auf die gesendete Abstimmungsaufforderung von dem Telekommunikationsendgerät (140, 160) über einen zweiten Kommunikationskanal, wobei die Abstimmungsantwort den gesendeten individuellen Code der Abstimmungsaufforderung, eine Authentifizierungsinformation des Nutzers des Telekommunikationsendgeräts (140, 160) sowie eine Abstimmungserklärung des Nutzers des Telekommunikationsendgeräts (140, 160) umfasst, wobei es sich bei dem ersten Kommunikationskanal um einen zu dem zweiten Kommunikationskanal separaten und/oder separat gesicherten Seitenkanal handelt,
• Prüfen der Validität des empfangenen Codes und der empfangenen Authentifizierungsinformation, wobei das Prüfen der Validität einen Vergleich des empfangenen Codes auf Übereinstimmung mit dem gesendeten individuellen Code umfasst und einen Vergleich der empfangenen Authentifizierungsinformation auf Übereinstimmung mit einer von dem Nutzerkonto (108) umfassten Authentifizierungsinformation des stimmberechtigtenTeilnehmers umfasst,
• auf eine erfolgreiche Prüfung hin, Signieren einer Kombination, welche den Datensatz der aktuellen Version des Antrags (124), über welche abzustimmen ist, den Identifikator des stimmberechtigten Teilnehmers und die Abstimmungserklärung des Nutzers des Telekommunikationsendgeräts (140, 160) umfasst, unter Verwendung des privaten kryptographischen Schlüssels (106) des stimmberechtigten Teilnehmers,
• Senden der signierten Kombination an das Antragsverwaltungsgerät (120) zum Prüfen der Signatur der Kombination unter Verwendung eines öffentlichen kryptographischen Schlüssels des stimmberechtigten Teilnehmers, zum Speichern zusammen mit der aktuellen Version des Antrags (124) und zum Auszählen des Abstimmungsergebnisses unter Verwendung der von der signierten Kombination umfassten Abstimmungserklärung.

13. Abstimmungssystem (101) für eine virtuelle Konferenz zum kryptographisch gesicherten Abstimmen über einen Antrag (124), wobei das Abstimmungssystem (101) ein Abstimmungsverwaltungsgerät (100) nach Anspruch 12 und ein Antragsverwaltungsgerät (120) für eine virtuelle Konferenz zum kryptographisch gesicherten Abstimmen über einen Antrag (124) umfasst, wobei das Antragsverwaltungsgerät (120) konfiguriert ist zum:
• Erstellen einer aktuellen Version des Antrags (124), über welche abzustimmen ist,
• Bereitstellen einer Aufstellung (128) aller stimmberechtigten Teilnehmer der virtuellen Konferenz, wobei die Aufstellung (128) für jeden der stimmberechtigten Teilnehmer jeweils einen Identifikator sowie einen öffentlichen kryptographischen Schlüssel umfasst,
• Erstellen einer Mehrzahl von Abstimmungsanfragen, wobei die Mehrzahl von Abstimmungsanfragen eine Abstimmungsanfrage für jeden der stimmberechtigten Teilnehmer umfasst, wobei die Abstimmungsanfragen der Mehrzahl von Abstimmungsanfragen jeweils den Identifikator des stimmberechtigten Teilnehmers umfassen, welchem sie zugeordnet sind, sowie einen Datensatz der aktuellen Version des Antrags (124), über welche abzustimmen ist,
• Senden der Mehrzahl von Abstimmungsanfragen an ein Abstimmungsverwaltungsgerät (100),
• in Antwort auf die Mehrzahl von Abstimmungsanfragen, Empfangen einer Mehrzahl von signierten Kombinationen, welche jeweils den Datensatz der aktuellen Version des Antrags (124), über welche abzustimmen ist, einen Identifikator eines stimmberechtigten Teilnehmers und eine Abstimmungserklärung eines Nutzers eines Telekommunikationsendgeräts (140, 160) umfasst, welches in einem Nutzerkonto (108) des von dem Identifikator identifizierten stimmberechtigten Teilnehmers registriert ist,
• Prüfen der Signaturen der Kombinationen unter Verwendung der öffentlichen kryptographischen Schlüssel der stimmberechtigten Teilnehmer,
• jeweils auf eine erfolgreiche Signaturprüfung hin, Speichern der jeweiligen Kombination zusammen mit der aktuellen Version des Antrags (124),
• Auszählen des Abstimmungsergebnisses unter Verwendung der von den signierten Kombinationen umfassten Abstimmungserklärungen,
• Speichern des Abstimmungsergebnisses zusammen mit der aktuellen Version des Antrags (124).

14. System umfassend ein Abstimmungssystem (101) nach Anspruch 13 sowie eine Mehrzahl von Telekommunikationsendgeräten (140, 160), welche jeweils einem der stimmberechtigten Teilnehmer der virtuellen Konferenz zugeordnet sind, wobei die Telekommunikationsendgeräte (140, 160) jeweils konfiguriert sind zum:
• Empfangen einer Abstimmungsaufforderung von dem Abstimmungsverwaltungsgerät (100), welche einen für den stimmberechtigten Teilnehmer, welchem das Telekommunikationsendgerät (140, 160) zugeordnet ist, erzeugten individuellen Code umfasst über einen ersten Kommunikationskanal,
• Anzeigen zumindest Teile der empfangenen Abstimmungsaufforderung unter Verwendung einer Anzeigevorrichtung (148, 168) des Telekommunikationsendgeräts (140, 160),
• Empfangen einer Nutzereingabe unter Verwendung einer Eingabevorrichtung (150, 170) des Telekommunikationsendgeräts (140, 160), wobei die Nutzereingabe eine Authentifizierungsinformation und eine Abstimmungserklärung des Nutzers des Telekommunikationsendgeräts (140, 160) umfasst,
• Erstellen einer Abstimmungsantwort auf die empfangene Abstimmungsaufforderung, wobei die Abstimmungsantwort den empfangenen individuellen Code der Abstimmungsaufforderung, die empfangene Authentifizierungsinformation und die empfangene Abstimmungserklärung umfasst,
• Senden der Abstimmungsantwort über einen zweiten Kommunikationskanal an das Abstimmungsverwaltungsgerät (100), wobei es sich bei dem ersten Kommunikationskanal um einen zu dem zweiten Kommunikationskanal separaten und/oder separat gesicherten Seitenkanal handelt.

## Claims

1. A method for cryptographically secured voting on a motion (124) using a voting system (101) for a virtual conference and a plurality of telecommunications terminals (140, 160), wherein the voting system (101) comprises a central motion management device (120) and a central voting management device (100), wherein each of the telecommunications terminals (140, 160) is associated with a respective voting participant of the virtual conference,
wherein, by way of the voting management device (100), the method comprises:
• receiving a plurality of voting questions from the motion management device (120), wherein the plurality of voting questions comprises a voting question for each of the voting participants, wherein the voting questions of the plurality of voting questions each comprises an identifier of the voting participant with whom they are associated and a data record of a current version of the motion (124) to be voted on,
wherein the method further comprises, for each of the received voting questions, by way of the voting management device (100):
• identifying a user account (108), managed by the voting management device (100), of the voting participant with whom the voting question is associated, using the identifier comprised by the voting question, wherein the user account (108) comprises a private cryptographic key (106) associated with the voting participant,
• generating an individual code for the voting participant with whom the voting question is associated,
• sending a voting request comprising the generated individual code via a first communication channel to the telecommunications terminal (140, 160) associated with the voting participant of the identified user account (108) using connection information of the telecommunications terminal (140, 160) comprising the identified user account (108),
• receiving a voting response to the sent voting request from the telecommunications terminal (140, 160) via a second communication channel, wherein the voting response comprises the sent individual code of the voting request, a piece of authentication information of the user of the telecommunications terminal (140, 160) and a voting declaration of the user of the telecommunications terminal (140, 160), wherein the first communication channel is a separate and/or separately secured side channel to the second communication channel,
• verifying the validity of the received code and the received authentication information, wherein the verification of the validity comprises comparing the received code for correspondence with the transmitted individual code and comparing the received authentication information for correspondence with authentication information of the voting participant comprised by the user account (108),
• upon successful verification, signing a combination comprising the data record of the current version of the motion (124) to be voted on, the identifier of the voting participant and the voting declaration of the user of the telecommunications terminal (140, 160), using the private cryptographic key (106) of the voting participant,
• sending the signed combination to the motion management device (120) for verifying the signature of the combination using a public cryptographic key of the voting participant, for storing it together with the current version of the motion (124) and for counting the voting result using the voting declarations comprised by the signed combination.

2. The method according to claim 1, wherein the voting declaration comprises an indication whether the user of the telecommunications terminal (140, 160) approves the current version of the motion (124) to be voted on, rejects the current version or abstains from voting.

3. The method according to any one of the preceding claims, wherein the identifier of the voting participant is a pseudonym of the voting participant, or
wherein the identifier of the voting participant comprises a real name of the voting participant.

4. The method according to any one of the preceding claims, wherein a first time interval is predetermined by the voting management device (100) for each of the sent voting requests for receiving the associated voting response,
wherein, if no voting response is received to one of the voting requests within the predetermined first time interval, the method further comprises by means of the voting management device (100):
• creating a voting failure message containing the data record of the current version of the motion (124) to be voted on and the identifier of the corresponding voting participant,
• sending the voting failure message to the motion management device (120).

5. The method according to claim 4, wherein a voting failure message is considered as an abstention in the course of the counting of the voting result.

6. The method according to any one of claims 4 to 5, wherein the voting requests each comprise time information about the start of the respective first time interval, wherein the telecommunications terminals (140, 160) each use the time information to indicate an expiry of the first time interval for responding to the voting request, or
wherein the telecommunications terminals (140, 160), upon receipt of the voting requests, in each case indicate an expiration of a predefined second time interval for responding to the voting request, which is shorter than the first time interval.

7. The method according to any one of the preceding claims, wherein the individual codes are random values or pseudo-random values.

8. The method according to any one of the preceding claims, wherein the second communication channel is an encrypted communication channel and/or
wherein the first communication channel is a side channel of a mobile radio network via which SMS messages are sent, or is a side channel of a mobile radio network via which automatically generated voice messages are sent.

9. The method according to any of the preceding claims, wherein the data record of the current version of the motion (124) comprises an identifier of the current version of the motion (124) and/or
wherein the voting requests each comprise the identifier of the current version of the motion (124) for display on a display device (148, 168) of the telecommunications terminal (140, 160) receiving the respective voting request, and/or
wherein the data record of the current version of the motion (124) comprises a hash value of the current version of the motion (124), and/or
wherein the data record of the current version of the motion (124) comprises a copy of at least a portion of the current version of the motion (124), and/or
wherein the voting requests each comprise the copy of at least a part of the current version of the motion (124) for display on a display device (148, 168) of the telecommunications terminal (140, 160) receiving the respective voting request.

10. The method according to any one of the preceding claims, wherein the data record of the current version of the motion (124) comprises a signature of the current version of the motion (124) with a private cryptographic key of the motion management device (120) as a signature key.

11. The method according to claim 10, wherein a processing of the voting questions by the voting management device (100) requires in each case a successful signature verification of the signature of the current version of the motion (124) comprised by the data record of the current version of the motion (124) using a public cryptographic key of the motion management device (120) as signature verification key.

12. A voting management device (100) for a virtual conference for cryptographically secured voting on a motion (124), said voting management device being configured to:
• receive a plurality of voting questions from the motion management device (120), wherein the plurality of voting questions comprises a voting question for each of the voting participants, wherein the voting questions of the plurality of voting questions each comprise an identifier of the voting participant with whom they are associated and a data record of a current version of the motion (124) to be voted on,
wherein the voting management device (100) is further configured, for each of the received voting questions, to:
• identify a user account (108), managed by the voting management device (100), of the voting participant with whom the voting question is associated, using the identifier comprised by the voting question, wherein the user account (108) comprises a private cryptographic key (106) associated with the voting participant,
• generate an individual code for the voting participant with whom the voting question is associated,
• send a voting request comprising the generated individual code via a first communication channel to the telecommunications terminal (140, 160) associated with the voting participant of the identified user account (108) using connection information of the telecommunications terminal (140, 160) comprising the identified user account (108),
• receive a voting response to the sent voting request from the telecommunications terminal (140, 160) via a second communication channel, wherein the voting response comprises the sent individual code of the voting request, a piece of authentication information of the user of the telecommunications terminal (140, 160) and a voting declaration of the user of the telecommunications terminal (140, 160), wherein the first communication channel is a separate and/or separately secured side channel to the second communication channel,
• verify the validity of the received code and the received authentication information, wherein the verification of the validity comprises comparing the received code for correspondence with the transmitted individual code and comparing the received authentication information for correspondence with authentication information of the voting participant comprised by the user account (108),
• upon successful verification, signing a combination comprising the data record of the current version of the motion (124) to be voted on, the identifier of the voting participant and the voting declaration of the user of the telecommunications terminal (140, 160), using the private cryptographic key (106) of the voting participant,
• sending the signed combination to the motion management device (120) for verifying the signature of the combination using a public cryptographic key of the voting participant, for storing it together with the current version of the motion (124) and for counting the voting result using the voting declaration comprised by the signed combination.

13. A voting system (101) for a virtual conference for cryptographically secured voting on a motion (124), wherein the voting system (101) comprises a voting management device (100) according to claim 12 and a motion management device (120) for a virtual conference for cryptographically secured voting on a motion (124), wherein the motion management device (120) is configured to:
• create a current version of the motion (124) to be voted on,
• provide a list (128) of all voting participants of the virtual conference, wherein the list (128) comprises an identifier and a public cryptographic key for each of the voting participants,
• create a plurality of voting questions, wherein the plurality of voting questions comprises a voting question for each of the voting participants, wherein the voting questions of the plurality of voting questions in each case comprise the identifier of the voting participant with whom they are associated and a data record of the current version of the motion (124) to be voted on,
• send the plurality of voting questions to a voting management device (100),
• in response to the plurality of voting questions, receive a plurality of signed combinations, which in each case comprises the data record of the current version of the motion (124) to be voted on, an identifier of a voting participant and a voting declaration of a user of a telecommunications terminal (140, 160) registered in a user account (108) of the voting participant identified by the identifier,
• verify the signatures of the combinations using the public cryptographic keys of the voting participants,
• in each case after a successful signature verification, save the respective combination together with the current version of the motion (124),
• count the voting result using the voting declarations comprised by the signed combinations,
• save the voting result together with the current version of the motion (124).

14. A system (101) comprising a voting system (101) according to claim 13 and a plurality of telecommunications terminals (140, 160), which are each associated with one of the voting participants of the virtual conference, wherein the telecommunications terminals (140, 160) are each configured to:
• receive a voting request from the voting management device (100), which comprises an individual code generated for the voting participant with whom the telecommunications terminal (140, 160) is associated, via a first communication channel,
• display at least parts of the received voting request using a display device (148, 168) of the telecommunications terminal (140, 160),
• receive a user input using an input device (150, 170) of the telecommunications terminal (140, 160), wherein the user input comprises a piece of authentication information and a voting declaration of the user of the telecommunications terminal (140, 160),
• create a voting response to the received voting request, wherein the voting response comprises the received individual code of the voting request, the received authentication information and the received voting declaration,
• send the voting response via a second communication channel to the voting management device (100), wherein the first communication channel is a separate and/or separately secured side channel to the second communication channel.

## Revendications

1. Procédé de vote sécurisé cryptographiquement pour une application (124) moyennant l'utilisation d'un système de vote (101) pour une conférence virtuelle ainsi qu'une multiplicité de terminaux de télécommunication (140, 160), où le système de vote (101) comprend un dispositif de gestion d'applications (120) centralisé et un dispositif de gestion de vote (100) centralisé, où chacun des terminaux de télécommunication (140, 160) est respectivement associé à un participant de la conférence virtuelle ayant le droit de vote,
le procédé comprenant, par le dispositif de gestion de vote (100) :
• la réception d'une multiplicité de demandes de vote provenant du dispositif de gestion d'application (120), où la multiplicité des demandes de vote comprend une demande de vote pour chacun des participants ayant le droit de vote, où les demandes de vote de la multiplicité des demandes de vote comprennent respectivement un identificateur du participant ayant le droit de vote, auquel elles sont associées, ainsi qu'un ensemble de données d'une version actuelle de l'application (124) pour laquelle il faut voter,
le procédé comprenant en outre, pour chacune des demandes de vote réceptionnées, par le dispositif de gestion de vote (100) :
• l'identification d'un compte utilisateur (108) géré par le dispositif de gestion de vote (100) du participant ayant le droit de vote, auquel la demande de vote est associée, moyennant l'emploi de l'identificateur compris dans la demande de vote, où le compte utilisateur (108) comprend une clé cryptographique privée (106) associée au participant ayant le droit de vote,
• la création d'un code individuel pour le participant ayant le droit de vote auquel la demande de vote est associée,
• l'envoi d'une invitation au vote comprenant le code individuel créé par le biais d'un premier canal de communication au terminal de télécommunication (140, 160) qui est associé au participant ayant le droit de vote du compte utilisateur (108) identifié moyennant l'emploi d'informations de liaison du terminal de télécommunication (140, 160) qui est compris par le compte utilisateur (108) identifié,
• la réception d'une réponse au vote suite à l'invitation au vote envoyée à partir du terminal de télécommunication (140, 160) par le biais d'un deuxième canal de communication, où la réponse au vote comprend le code individuel envoyé de l'invitation au vote, une information d'authentification de l'utilisateur du terminal de télécommunication (140, 160) ainsi qu'une déclaration de vote de l'utilisateur du terminal de télécommunication (140, 160), où, dans le cas du premier canal de communication, il s'agit d'un canal secondaire protégé séparé vers le deuxième canal de communication et/ou d'un canal secondaire protégé séparément,
• la vérification de la validité du code réceptionné et de l'information d'authentification reçue, où la vérification de la validité comprend une comparaison du code reçu en ce qui concerne la concordance avec le code individuel envoyé et une comparaison de l'information d'authentification reçue en ce qui concerne la concordance avec une information d'authentification comprise par le compte utilisateur (108) du participant ayant le droit de vote.
• suite à une vérification réussie, la signature d'une combinaison laquelle comprend l'ensemble de données de la version actuelle de l'application (124) pour laquelle il faut voter, l'identificateur du participant ayant le droit de vote et la déclaration de vote de l'utilisateur du terminal de télécommunication (140, 160) moyennant l'emploi de la clé cryptographique privée (106) du participant ayant le droit de vote,
• l'envoi de la combinaison signée au dispositif de gestion d'application (120) pour la vérification de la signature de la combinaison moyennant l'emploi d'une clé cryptographique publique du participant ayant le droit de vote, pour l'enregistrement conjointement avec la version actuelle de l'application (124) et pour le dépouillement du résultat de vote moyennant l'emploi des déclarations de vote comprises par la combinaison signée.

2. Procédé selon la revendication 1, dans lequel la déclaration de vote comprend une indication si l'utilisateur du terminal de télécommunication (140, 160) approuve la version actuelle de l'application (124), pour laquelle il faut voter, rejette la version actuelle ou s'abstient du vote.

3. Procédé selon l'une des revendications précédentes, dans lequel, dans le cas de l'identificateur du participant ayant le doit de vote, il s'agit d'un pseudonyme du participant ayant le droit de vote, ou
dans lequel l'identificateur du participant ayant le droit de vote comprend un nom connu du participant ayant le droit de vote.

4. Procédé selon l'une des revendications précédentes, dans lequel respectivement un premier intervalle de temps est prédéfini pour la réception de la réponse au vote correspondante par le dispositif de gestion de vote (100) pour les invitations aux votes envoyées,
où le procédé, dans le cas où aucune réponse au vote n'est réceptionnée pendant l'intervalle de temps prédéfini, comprend en outre, par le dispositif de gestion de vote (100) :
• l'établissement d'une déclaration d'absence de vote, laquelle comprend l'ensemble de données de la version actuelle de l'application (124) pour laquelle il faut voter, et l'identificateur du participant ayant le droit de vote correspondant,
• l'envoi de la déclaration d'absence de vote au dispositif de gestion de vote (120).

5. Procédé selon la revendication 4, dans lequel une déclaration d'absence de vote est évaluée comme une abstention dans le cadre du décompte du résultat de vote.

6. Procédé selon l'une des revendications 4 à 5, dans lequel les invitations aux votes comprennent respectivement une information horaire concernant le début du premier intervalle de temps respectif, dans lequel les terminaux de télécommunication (140, 160) utilisent l'information horaire respectivement pour indiquer un déroulement du premier intervalle de temps pour la réponse de l'invitation au vote, ou
dans lequel les terminaux de télécommunication (140, 160), suite à l'obtention des invitations aux votes, indiquent respectivement un déroulement d'un deuxième intervalle de temps prédéfini pour la réponse de l'invitation au vote, lequel est plus court que le premier intervalle de temps.

7. Procédé selon l'une des revendications précédentes, dans lequel, dans le cas du code individuel, il s'agit respectivement de valeurs aléatoires ou de pseudo-valeurs aléatoires.

8. Procédé selon l'une des revendications précédentes, dans lequel, dans le cas du deuxième canal de communication, il s'agit d'un canal de communication chiffré, et/ou
dans lequel, dans le cas du premier canal de communication, il s'agit d'un canal secondaire d'un réseau radio mobile par le biais duquel des messages SMS sont envoyés, ou d'un canal secondaire d'un réseau radio mobile par le biais duquel des messages vocaux générés automatiquement sont envoyés.

9. Procédé selon l'une des revendications précédentes, dans lequel l'ensemble de données de la version actuelle de l'application (124) comprend un identificateur de la version actuelle de l'application (124), et/ou
dans lequel les invitations aux votes comprennent respectivement l'identificateur de la version actuelle de l'application (124) pour l'affichage sur un dispositif d'affichage (148, 168) du terminal de télécommunication (140, 160) récepteur de l'invitation au vote respective, et/ou
dans lequel l'ensemble de données de la version actuelle de l'application (124) comprend une valeur de hachage de la version actuelle de l'application (124), et/ou
dans lequel l'ensemble de données de la version actuelle de l'application (124) comprend une copie d'au moins une partie de la version actuelle de l'application (124), et/ou
dans lequel les invitations aux votes comprennent respectivement la copie d'au moins une partie de la version actuelle de l'application (124) pour l'affichage sur un dispositif d'affichage (148, 168) du terminal de télécommunication (140, 160) réceptionnant l'invitation au vote respective.

10. Procédé selon l'une des revendications précédentes, dans lequel l'ensemble de données de la version actuelle de l'application (124) comprend une signature de la version actuelle de l'application (124) avec une clé cryptographique privée du dispositif de gestion d'application (120) servant de clé de signature.

11. Procédé selon la revendication 10, dans lequel un traitement des demandes de vote par le dispositif de gestion de vote (100) est conditionnée respectivement à une vérification de signature réussie de la signature comprise par l'ensemble de données de la version actuelle de l'application (124) de la version actuelle de l'application (124) avec une clé cryptographique publique du dispositif de gestion d'application (120) servant de clé de signature.

12. Dispositif de gestion de vote (100) pour une conférence virtuelle pour le vote sécurisé cryptographiquement d'une application (124), lequel est conçu pour :
• la réception d'une multiplicité de demandes de vote provenant du dispositif de gestion d'application (120), où la multiplicité de demandes de vote comprend une demande de vote pour chacun des participants ayant le droit de vote, où les demandes de vote de la multiplicité des demandes de vote comprennent respectivement un identificateur du participant ayant le droit de vote, auquel elles sont associées, ainsi qu'un ensemble de données d'une version actuelle de l'application (124) pour laquelle il faut voter,
dans lequel le dispositif de gestion de vote (100) est en outre conçu, pour chacune des demandes de vote réceptionnées, pour :
• l'identification d'un compte utilisateur (108) géré par le dispositif de gestion de vote (100) du participant ayant le droit de vote, auquel la demande de vote est associée, moyennant l'emploi de l'identificateur compris dans la demande de vote, où le compte utilisateur (108) comprend une clé cryptographique privée (106) associée au participant ayant le droit de vote,
• la création d'un code individuel pour le participant ayant le droit de vote auquel la demande de vote est associée,
• l'envoi d'une invitation au vote comprenant le code individuel créé par le biais d'un premier canal de communication au terminal de télécommunication (140, 160) lequel est associé au participant ayant le droit de vote du compte utilisateur (108) identifié moyennant l'emploi d'informations de liaison du terminal de télécommunication (140, 160) qui est compris par le compte utilisateur (108) identifié,
• la réception d'une réponse au vote suite à l'invitation au vote envoyée à partir du terminal de télécommunication (140, 160) par le biais d'un deuxième canal de communication, où la réponse au vote comprend le code individuel envoyé de l'invitation au vote, une information d'authentification de l'utilisateur du terminal de télécommunication (140, 160) ainsi qu'une déclaration de vote de l'utilisateur du terminal de télécommunication (140, 160), où, dans le cas du premier canal de communication, il s'agit d'un canal secondaire vers le deuxième canal de communication protégé séparé et/ou d'un canal secondaire protégé séparément,
• la vérification de la validité du code réceptionné et de l'information d'authentification reçue, où la vérification de la validité comprend une comparaison du code reçu en ce qui concerne la concordance avec le code individuel envoyé et une comparaison de l'information d'authentification reçue en ce qui concerne la concordance avec une information d'authentification comprises par le compte utilisateur (108) du participant ayant le droit de vote,
• suite à une vérification réussie, la signature d'une combinaison, laquelle comprend l'ensemble de données de la version actuelle de l'application (124) pour laquelle il faut voter, l'identificateur du participant ayant le droit de vote et la déclaration de vote de l'utilisateur du terminal de télécommunication (140, 160) moyennant l'emploi de la clé cryptographique privée (106) du participant ayant le droit de vote,
• l'envoi de la combinaison signée au dispositif de gestion d'application (120) pour la vérification de la signature de la combinaison moyennant l'emploi d'une clé cryptographique publique du participant ayant le droit de vote, pour l'enregistrement conjointement avec la version actuelle de l'application (124) et pour le dépouillement du résultat de vote moyennant l'emploi des déclarations de vote comprises par la combinaison signée.

13. Système de vote (101) pour une conférence virtuelle pour le vote sécurisé cryptographiquement d'une application (124), le système de vote (101) comprenant un dispositif de gestion de vote (100) selon la revendication 12 et un dispositif de gestion d'application (120) pour une conférence virtuelle pour le vote sécurisé cryptographiquement par le biais d'une application (124), dans lequel le dispositif de gestion d'application (120) est conçu pour :
• l'établissement d'une version actuelle de l'application (124) pour laquelle il faut voter,
• la mise en place d'une composition (128) de tous les participants ayant le droit de vote de la conférence virtuelle, où la composition (128) comprend, pour chacun des participants ayant le droit de vote, un identificateur ainsi qu'une clé cryptographique publique,
• l'établissement d'une multiplicité de demandes de vote, où la multiplicité de demandes de vote comprend une demande de vote pour chacun des participants ayant le droit de vote, où les demandes de vote de la multiplicité des demandes de vote comprennent respectivement un identificateur du participant ayant le droit de vote, auquel elles sont associées, ainsi qu'un ensemble de données d'une version actuelle de l'application (124) pour laquelle il faut voter,
• l'envoi de la multiplicité des demandes de vote à un dispositif de gestion de vote (100),
• en réponse à la multiplicité des demandes de vote, la réception d'une multiplicité de combinaisons signées, lesquelles comprennent respectivement l'ensemble de données de la version actuelle de l'application (124) pour laquelle il faut voter, un identificateur d'un participant ayant le droit de vote et une déclaration de vote d'un utilisateur d'un terminal de télécommunication (140, 160) qui est enregistré dans un compte utilisateur (108) du participant ayant le droit de vote identifié par l'identificateur,
• la vérification des combinaisons signées moyennant l'emploi de la clé cryptographique publique du participant ayant le droit de vote,
• respectivement, suite à une vérification de signature réussie, l'enregistrement des combinaisons respectives conjointement avec la version actuelle de l'application (124),
• le décompte du résultat de vote moyennant l'emploi des déclarations de vote comprises par les combinaisons signées,
• l'enregistrement du résultat de vote conjointement avec la version actuelle de l'application (124).

14. Système comprenant un système de vote (101) selon la revendication 13 ainsi qu'une multiplicité de terminaux de télécommunication (140, 160) lesquels sont respectivement associés à un des participants ayant le droit de vote de la conférence virtuelle, où les terminaux de télécommunication (140, 160) sont conçus pour :
• la réception d'une invitation au vote provenant du dispositif de gestion de vote (100), laquelle comprend un code créé individuellement pour le participant ayant le droit de vote, auquel le terminal de télécommunication (140, 160) est associé, par le biais d'un premier canal de communication,
• l'affichage d'au moins des parties de l'invitation au vote moyennant l'emploi d'un dispositif d'affichage (148, 168) du terminal de télécommunication (140, 160),
• la réception d'une entrée d'utilisateur moyennant l'emploi d'un dispositif d'entrée (150, 170) du terminal de télécommunication (140, 160), où l'entrée d'utilisateur comprend une information d'authentification et une déclaration de vote de l'utilisateur du terminal de télécommunication (140, 160),
• la production d'une réponse au vote suite à l'invitation au vote réceptionnée, où la réponse au vote comprend le code individuel reçu de l'invitation au vote, l'information d'authentification reçue et la déclaration de vote reçue,
• l'envoi de la réponse au vote par le biais d'un deuxième canal de communication au dispositif de gestion de vote (100), où, dans le cas du premier canal de communication, il s'agit d'un canal secondaire protégé séparé du deuxième canal de communication et/ou d'un canal secondaire protégé séparément.
